# EUROPEAN PATENT APPLICATION

(11) **EP 1 257 132 A1**
(43) Date of publication of application: **13.11.2002**
(21) Application number: 01201700.0
(22) Date of filing: 08.05.2001
(51) Int. Cl.: H04Q 7/26, H04Q 7/32

(54) **Apparatus for integrating mobile telephones as terminals of a private communication system**

(71) Applicant: Telefonaktiebolaget L M Ericsson (Publ), 126 25 Stockholm (SE)
(72) Inventor: Pérez Fernandez, Javier, 28030 Madrid (ES)
(74) Representative: Ungria Lopez, Javier

(57) **Abstract**

Apparatus to integrate mobile terminals (MS) (2) as extension terminals of a private communication system (PCS) (1). The PCS (1) can consist on one communication node -such as a Private Brach Exchange (PBX), or a Voice over IP (VoIP) telephony system- or a set of interconnected communication nodes serving voice and/or multimedia extensions.

The MSs integrated according to this invention, appear to the PCS (1) as normal extensions (wired or wireless), thus gaining access to all telephony services and supplementary services offered in the PCS (1) for telephony extensions.

The MSs (2) of this invention is a device equipped with a standard interface to connect with public mobile network(s), and equipped additionally with a Bluetooth interface that contains, at least, the elements defined for the Cordless Telephony Profile of Bluetooth. The Bluetooth interface in the MS (2) is used to connect it with the PCS (1) by means of a peer Bluetooth interface (5) either: integrated in the PCS (1) or allocated a gateway that translate Bluetooth protocol and media format to a protocol and media format already used in the PCS (1) for existing telephony extensions.

## Description

### OBJECT OF THE INVENTION

The present invention relates to a dual mode mobile station that can operate with two different networks; the first network being, for instance, a public mobile network (PMN), and the second network being, for instance, a private communication network or, more generally, a private communication system (PCS).

More particularly, the invention relates to the method for providing an integration of such MS into the telephony extension's realm of an existing private communication system.

### BACKGROUND OF THE INVENTION

A public mobile network (PMN) provides a mobile telephony service to a wide range of public users using one of the common cellular systems standards, such as Global System for Mobile communications (GSM), Advanced Mobile Phone Service (AMPS), Digital-AMPS (D-AMPS), etc.

Hereinafter, and for the shake of a greater simplicity, the term GSM can be used across the present invention to refer to a public mobile network (PMN) regardless its technology (GSM, AMPS, or other). However, the scope of the invention is not affected by the used PMN technology.

In an enterprise environment, private telephony service is generally provided by a private communication system (PCS). The PCS usually consist of one private communication node (where the software that controls and/or supervises the communications resides), or a network of interconnected private communication nodes (private communication network or PCN) that serve to the same company, and where the user terminals (voice and/or multimedia extensions) belonging to such company are connected.

The PCS node(s) can use one or more different media switching and signalling technologies, and can be allocated in the company office's premises (Private Branch Exchange or PBX) or be allocated in the premises of a public telecommunication service provided (for instance a CENTREX service). The telephony extensions (voice and/or multimedia) are connected to the PCS in order to exchange signalling and media; being such connection accomplished using different connection technologies (circuit switching oriented or packet oriented) and different connection means (wired and/or wireless).

Hereinafter, and for the shake of a greater simplicity, the term PBX can be used across the present invention to refer also to a PCS. This will be done regardless the media switching and signalling technology used in the private communication node(s) (if circuit switching, packet switching or both), regardless if such PCS consist in one or more private communication nodes, and, in the latest case, regardless the technology used to interconnect such nodes: if dedicated lines, lines shared with other users or applications, virtual private networking (VPN) through another network (e.g.: public network), etc., or the signalling protocol and means to transport such protocol (if circuit oriented or packet oriented). However, the scope of the invention is not affected by any of these different technologies used to implement the PCS.

The term MS shall be used across the present invention to refer in general to a Mobile Station; such MS can be, for instance, a GSM phone, or other kind of mobile terminal that interworks with a PMN. Also related to this term, the term "corporate MS" can be used across the present invention to refer to a MS that is -in some way-integrated in the private communication system or network.

The fast growth of the mobile telephony systems and its penetration in the enterprise communication segment, in some cases even replacing the traditional desk wired phones, is generating a number of new problems for telecommunication managers. The most important are cited below.

A significant problem is the cost associated to the calls when using a GSM phone (hereinafter referred also as mobile station or MS) instead of the PBX's desk phone while the employees are at the office. This is applicable when calling to a partner and both are at their offices, since the cost is much lower (even zero) when using a PBX's phone for making such calls, than when using the GSM network. It is also applicable when making outgoing external calls through the public network (e.g. through Public Switched Telephone Network or PSTN, or through Integrated Services Digital Network or ISDN), which in most cases are more expensive when made from the MS than when they are made from a PBX's phone. This problem is especially serious in the case of companies that already have international leased lines to link offices located in different countries, since these lines become wasted.

Another important problem is the amount of terminals that some users needs to manage when they are at the office; these terminals can be: a PBX desk phone, a MS and a cordless terminal (normally, a Digitally Enhanced Cordless Telecommunications or DECT) terminal. More terminals mean more cost for the company, different user interfaces for the employees and more telephone numbers to manage.

Another problem arises due to the difficulties to cover the high density of users of a typical office environment with the traditional PMNs (such as GSM).

No less important is the high degree of dependency that a company can have with a certain GSM provider (operator). For instance: once such operator has placed radio accesses (*e.g.*: Base Transceiver Stations or BTSs) within the company's premises, or has arranged with the company a short dialling numbering plan, etc.), it makes more difficult for that company to periodically re-negotiate its agreements with such mobile operator in order to lower its telephony costs.

One solution to the problem has been to provide dual mode GSM/DECT phones, so the same terminal can be used out of the office, through the GSM operator's network, and inside the company, through the PBX corporate network infrastructure acting as a DECT extension of the PBX. In fact, those terminals where really two telephones (with their respective radio transceivers and antennas) in one box. This solution has not succeeded, primary due to the high cost of such terminals and to the lack of competition in the market supply, given their low degree of demand.

Another kind of solution has been applied that provides access to the corporate MS into the company's PBX. This kind of solution extends in some way the GSM operator's mobile network inside the company by integrating the radio access of the mobile network's operator within the company's premises. These solutions are described for instance in patent applications; WO-A-9734437, WO-A-9827761 and WO-A-9621329.

Patent application WO-A-9734437 (Ericsson) discloses methods and means to provide the MS with access to the PBX, as well as to the services provided by the PBX.

It defines what it calls a *wireless office system* that, in one side is connected to the PBX, and in the other to a Mobile Switching Center (MSC) of a public mobile operator. The *wireless office system* is also provided with what it is called RAN (radio access network) which is emulating a standard BTS for the corporate MS located in the office area. Such *wireless office system* is "seen" as another MSC from the public mobile operator's MSC, and as either: another PBX, or an ISDN user (extension) with Primary Rate Access, from the PBX.

Patent application WO-A-9827761 (Ericsson) discloses methods and means pretty similar to the ones described in WO-9734437. The major difference is that, in this case, the radio access from the corporate MS uses the standard BTSs from the public mobile operator (no device similar to RAN as in previous WO-A-9734437 is needed).

It defines what it calls a *service* engine that, in one side is connected to an MSC of a public mobile operator, and in the other to the PBX; however such *service engine* does not provide any mechanism to integrate the corporate MS into the PBX extension realm.

Even though patent applications WO-A-9734437 and WO-A-9827761 provide some kind of integration of the corporate MS into the PBX's extension realm, and, probably, contribute to reduce cost of outgoing calls, both have some drawbacks:
- They need a complex and expensive apparatus, the so called:
   - *wireless office system* WO-A-9734437
   - *service engine* WO-A-9827761
   to perform the interworking between the PBX and the public mobile network.
- To accomplish their basic operation, they also need to introduce changes in routing tables in the PBX.
- Configuration of networks elements in the eventual telecommunication system disclosed in these invention including the:
   - *wireless office system* network elements WO-A-9734437
   - *service engine* WO-A-9827761
   and the PBX makes even more complex the administration of the telephony users (including corporate MS, and users belonging to the legacy company's telephony system (*e.g.*: PBX).

Patent application WO-A-9827761 does not integrate the corporate MS into the corporate PBX extension realm, thus the MS can not gain access to the telephony services provided from the corporate PBX).

Patent application WO-A-9621329 discloses a solution similar to the ones disclosed in WO-A-9734437 and WO-A-9827761, using what it calls *mobility server* to link the PBX and the public mobile network. This patent has the same drawbacks as the one cited for WO-A-9734437 and WO-A-9827761.

Another kind of solution has been applied that provides the corporate MS with a secondary interface access (wired or wireless) which is different from the standards radio access used to connect with the public mobile network (*e.g*.: radio standards used for GSM); so the MS can, using this secondary access, to call and be called to/from any other network (including the public mobile network) via a secondary network (*e.g.*: the enterprise's private communication network). These solutions are described for instance in patent applications: WO-A-9736442, WO-A-9815143 and WO-A-9948315.

Patent application WO-A-9736442 (British Telecom) discloses methods and means to provide the MS with an alternative path to reach a BTS of a mobile public operator via PSTN, ISDN, or a fixed point-to-point connection or an alternative microwave radio link between the company's premises and the call processing part of a mobile public operator's BTS.

It defines what it calls an *interface unit* that, in one side connects with the MS, and in the other side connects with the alternative network (PSTN, ISDN or alternative radio link).

The connection between the MS and the *interface unit* can be a wired electrical connection, or an optical or ultrasonic link.

The operation in such invention involves a method by which the radio transceiver part of the MS is disabled (disconnected) as soon as the MS is connected with the cited *interface unit.*

Even though patent application WO-A-9736442 provides an alternative communication path for the MSs that reduces load on mobile frequency bands, and, probably, contributes to reduce cost of outgoing calls, it has some drawbacks:
- Since the mobile radio part of the MS (the one interfacing with the GSM network) is disabled when it is connected to the interface unit, some modifications in the mobile network nodes are needed (disclosed in the patent) in order to receive incoming calls in such MS. Also some modifications in the mobile network nodes are needed (disclosed in the patent) to allow outgoing calls from the MS and to allow specific mobility management functions.
- The legacy telephony system in the company (*e.g.*: a PBX), and the new telecommunication system disclosed in this invention, keep absolutely separated. So, corporate users, will continue seeing both communication systems as apart from each other, with :no correspondence at all regarding service levels.

Patent application WO-A-9815143 (Nokia) discloses methods and means to provide the MS with an alternative path to reach: the mobile network (via an MSC of a mobile operator), ISDN, PSTN, and other MSs located into the company's office.

It defines what it calls a *terminal device* that, in one side connects with the MS, and in the other side connects with the company's data communication network.

The connection between the MS and the *terminal device* can be a wired electrical connection, or an infrared connection. To get then connection between the MS and the other networks (GSM, ISDN, PSTN), the company's data communication network is provided with a *network server* that links the company's data communication network with the other networks (GSM, ISDN, PSTN), performs the corresponding gateway functions and maintain MS status; and also is provided with what it calls *telecommunication servers* (with no specific function defined).

Similar to previously cited patent application (WO-A-9736442), the operation in this invention involves a method by which the radio transceiver part of the MS is disabled (disconnected) as soon as the MS is connected with the cited *terminal device.*

When the MS is connected with the *terminal device,* it is addressed in the environment of the company's data communication network by means of its transport address (*e.g*.: Transmission Control Protocol/Internet Protocol address, or TCP/IP address); then the *network server* perform the necessary translation to the corresponding phone number of the MS (*e.g*.: its Mobile Subscriber ISDN number or MSISDN) and vice-versa.

Even though patent application WO-A-9815143 provides the same kind of advantages as WO-A-9736442, it has still the same kind of drawbacks:
- Since the mobile radio part of the MS (the one interfacing with the GSM network) is disabled when it is connected to the interface unit, some modifications in the mobile network nodes are needed in order to receive incoming calls in such MS. Such modifications consist on requesting to the mobile operator, via the *network server* a forwarding (cited as *transfer* in such patent) of all calls to the MS (when the MS is connected to the *terminal device),* and the cancellation of such forwarding (when the MS is disconnected from the *terminal device).* Another drawback is that such forwarding operation requested from 3^{rd} party does not belong from standard mobile operations.
- Besides, the so called network server is linked to a specific MSC of the mobile operator. Thus, all above does not ever solve, but even increase, the dependency of the enterprise with a certain mobile operator.
- This invention requires all corporate extensions to be "moved" to the new fashioned MS-terminal device assembly. However, it does not disclosed at all how services, normally provided by today's PBX (or in cooperation with external servers), are going to be provided.

Patent application WO-A-9948315 (Nokia) discloses what it calls a *wireless intranet office* (*WIO*) that contains the necessary elements to perform the access, control and gateway functions to provide the corporate MS with an alternative path to get the public mobile network, ISDN, PSTN, and also other terminals connected in the *WIO* or in the company communication network. This patent is a more detailed application of patent application WO-A-9815143 (actually, it seems a "continuation in part" of that patent; even same inventor).

In this invention, the MS is provided with a secondary network interface to connect it with the *WIO* via what it calls a *personal base unit.* All the network layer in the MS (including call control, supplementary services control and mobility management control) in the MS is common for both interfaces: the standard towards the mobile network and the new one towards the *WIO*; being the only difference that the interface towards the *WIO* can be accomplished by means of a wired connection or by means of a low power radio-frequency link, such as Bluetooth.

The *personal base unit* acts as a standard BTS for the MS, and converts the GSM signalling to H.323 (CCITT standard for telephony over packet networks). A server located in the enterprise's Intranet acts as H.323-Gatekeeper (call controller in H.323). Such server controls the registrations and connections of the H.323 endpoints (*i*.*e*.: the *personal base units)* and communicates the registrations to another element (*ILR*) that has a standard MAP (Mobile Application Part) interface to the HLR/VLR (Home Location Register/Visitor Location Register) of the mobile network. There is also a H.323-Gateway that is connected to a MSC of the operator's public mobile network. Such gateway converts signalling protocol between H.323 and standard GSM protocol, it also performs the needed media transcoding.

Also the *WIO* can contain standard BTS's allocated in the office's premises and a GSM/IP gateway to connect them with the rest of the *WIO*'s elements via the corporate data network.

The invention involves a method by which the radio transceiver part of the MS is disabled (disconnected) as soon as the MS is connected with the cited *personal base unit,* just keeping in contact with neighbouring (standard) BTS's to perform standard mandatory radio measurements.

Even though patent application WO-A-9948315 provides the same kind of advantages as WO-A-9736442 and WO-A-9815143, it has still some drawbacks:
- To accomplish its basic operation for calls to/from corporate MS towards another MS outside the scope of the WIO, it still needs a connection with HLR, VLR and MSC nodes of a certain mobile operator.
- It requires specific modification in commercially available MSs in order to switch the GSM standard signalling between the two different interfaces.
- No less important are the security issues to allow interconnection between the data network of the mobile operator and the one of its customers (the enterprises) via IP (Internet Protocol) network.
- Configuration of networks elements in the eventual telecommunication system disclosed in this invention (including WIO network elements and legacy system(s) in the company (*e.g.*: PBX) makes even more complex the administration of the telephony users (including corporate MS, and users belonging to the legacy company's telephony system (*e.g.*: PBX).
- Only basic calls (without any extra supplementary service, such as diversion, call-back, voice-mail, caller identification, etc.) between corporate MS and existing telephone extensions in the company are regarded.
- Calls between corporate MS and SCN extensions inside the company (*e.g.*: extensions belonging to the corporate PBX) have to make use of a PSTN gateway, that seems to imply these calls have to hop off to the public fixed network (PSTN) and will therefore be charged.

Although solution disclosed in application patents WO-A-9736442, WO-A-9815143, WO-A-9948315 "plugs" the MS into the company's data network, said solution does not disclose any method to integrate the corporate MS into the telephone extension realm of the corporate PBX, thus the MS user can not gain access to the telephony services provided from the corporate PBX.

All these patent applications do not solve, but even increase, the dependency of the enterprise with a certain mobile operator. Furthermore, they need continuous cooperation of the public mobile network for all calls where, at least, one of the parties is a corporate MS.

### DESCRIPTION OF THE INVENTION

The information disclosed hereinafter will explain a method and system, different from the present state-of-the-art, to integrate a corporate MS in a legacy PCS as "one more" telephony extension among the existing ones served by such PCS, by using Bluetooth interfaces.

In a **first embodiment** of this invention, the legacy PCS node where the corporate MSs are housed is a traditional PBX that uses circuit switching oriented technology for providing telephony service (media switching and signalling), where all telephony extension terminals (traditional wired or wireless PBX voice and/or multimedia extensions) belonging to such PBX are fulfilling any of the existing signalling access protocols and media transfer protocols used for telephony in circuit switching oriented systems. The switching or access technology used by the rest of the PCS nodes (if any) and their terminals: if circuit or packet oriented technologies, or a mixture of both; does not affect the scope of this embodiment.

In this embodiment a corporate MS is fully integrated into the PBX extension realm and, consequently, into the corporate PCS; thus gaining access to all telephony services and supplementary services available in such PBX and/or PCS.

In a **second embodiment** of this invention, the legacy PCS communication node where the corporate MSs are housed is a voice over IP (VoIP) telephony system (or IP-PBX) that uses packet switching oriented technology for providing telephony service (media switching and signalling), where all telephony extension terminals (VoIP voice and/or multimedia extensions) belonging to such IP-PBX are fulfilling any of the existing signalling protocols -such as H.323 or Session Initiation Protocol (SIP)- and media transfer protocols -such as Real Time Protocol (RTP)- used in packet switching oriented systems.

The switching or access technology used by the rest of the PCS nodes (if any) and their terminals: if circuit or packet oriented technologies, or a mixture of both; does not affect the scope of this embodiment.

In this embodiment a corporate MS is fully integrated into the IP-PBX extension realm and, consequently, into the corporate PCS; thus gaining for the corporate MS access to all telephony services and supplementary services available in such VoIP telephony system.

In a **third and preferred embodiment** of this invention, the legacy PCS communication node where the corporate MSs are housed is a PBX that uses both: circuit switching oriented (first embodiment) and packet switching oriented (second embodiment) technologies for providing telephony service (media switching and signalling), where there is a variety of telephony extension terminals (voice and/or multimedia extensions) belonging to such PBX, some of them using any existing signalling protocol and media transfer protocol used in circuit switching oriented systems, and some others using any existing VoIP signalling protocol and media transfer protocol used in packet switching oriented systems (second embodiment). The switching or access technology used by the rest of the PCS nodes (if any) and their terminals: if circuit or packet oriented technologies, or a mixture of both; does not affect the scope of this embodiment.

In this embodiment a corporate MS is fully integrated into the PBX extension realm and, consequently, into the corporate PCS; thus gaining access to all telephony services and supplementary services available in such PBX and/or PCS.

For the sake of a greater simplicity, hereinafter only the general term PBX shall be cited to refer the legacy PCS node where the corporate MS is housed, regardless if such PBX and their terminals uses exclusively circuit switching oriented technology (first embodiment), or if it uses exclusively packet switching oriented technology (second embodiment) or a mixture of both (third and preferred embodiment). Nevertheless, and wherever in this invention it is not specified a specific method or mean, it shall be pretty obvious for any person skilled in the art how to apply/extend such methods and means for the particular case where the legacy PCS is a traditional PBX (first embodiment), a VoIP telephony system (IP-PBX referred in the second embodiment), or a mixture of both (third and preferred embodiment).

The main object of the present invention is to characterise the methods and means that, without implying any change affecting the mobile network *(e.g.:* GSM network), fully integrate the corporate MS into the legacy PCS's extensions realm, and avoids all the drawbacks aforementioned related with the present state-of-the-art. That is to say:
- To avoid dependency (and billing) from mobile network operators when using the mobile telephone (MS) to make or receive calls while the employee is at the office. Calls to/from the corporate MS are done through the legacy telephony system (PCS).
- The corporate MS, in the scope of this invention, can be any commercially available MS provided with Bluetooth interface, and, more precisely, provided with (at least) the so called *Cordless Telephony Profile* of the general Bluetooth protocol stack elements. These kind of MSs are becoming more and more common, given the high degree of additional functionality they can gain with such a secondary interface; therefore, its cost will be lower than for other MS equipped with other kind of secondary interfaces (suitable only for more specific applications).
- To avoid any kind of modification in the public mobile network nodes, and either: to avoid or minimise any modification in the legacy PCS legacy telephony system. The corporate MS will behave as a "normal" MS for the mobile network, and as a "normal" voice and/or multimedia extension for the PCS legacy telephony system, thus not creating any new configuration issue nor modify existing configuration methods or means.
- To diminish the cost and complexity of the physical and logical means needed to perform such integration.
- To gain for the corporate MS fully access to the services/features nowadays available for the users of a PCS legacy telephony system. Actually, the MS will be seen from such legacy system like "one more" telephony extension among the existing ones.

Bluetooth is the name given to a new short range (10 to 100 m.) low-power radio frequency (LPRF) technology, that operates in the 2.4 GHz ISM (Industry, Science and

Medicine) band. It is essentially a protocol for wireless connectivity of diverse set of devices (units), allowing point-to-point as well as point-to-multipoint connections among them.

Every Bluetooth device is uniquely identified by a 48-bits identifier called *Bluetooth Device Address* (BD_ADDR).

In point-to-multipoint connection, the communication channel is shared among several Bluetooth units. Two or more units sharing the same channel form what is called a *piconet.* In this case, there is one *master unit* and up to seven active *slave units* in a piconet. The Bluetooth devices can be in either of the states: active, park, hold and sniff. Multiple piconets with overlapping coverage areas form what is called a *scatternet.*

Bluetooth defines a protocol stack that includes, among others facilities, the physical RF link, audio management, security aspects, a telephony control protocol and even adopt the IETF Point to Point Protocol (PPP) (RFC 1661) to support Transmission Control Protocol (TCP)/User Datagram Protocol (UDP)/Internet Protocol (IP) and Wireless Access Protocol (WAP).

Elements in Bluetooth protocol stack are not all mandatory for all the applications. Instead, there are defined several protocol profiles according to the specific usage model.

For instance, the *Cordless* Telephony Profile takes some elements of the general Bluetooth protocol stack to enable extra mode of operation to, for instance, mobile phones, using Bluetooth as a short-range bearer for accessing telephony services of another network *(e.g.:* fixed network) through a Bluetooth base station connected to such network.

A PBX is a private telephony exchange system that basically consist of: interfaces to connect with end-user terminals (extension line interfaces), interfaces to connect with external lines towards public exchanges or other private exchange (known as trunk lines or external line interfaces), switch means to interconnect, when needed, those interfaces lines, and a processor, or set of processors, that executes the software (control software) that controls and/or supervises the connections, signalling and services demanded for those extension and trunk lines.

Following are the some of the most common extension line interface types in use in today's PBXs:
- Analogue line interfaces, used to connect Plain Old Telephone Set/Service (POTS) terminals.
- Digital line interfaces, used to connect manufacturer-specific terminals (*e*.*g*.: digital telephone set, operator console, etc.; normally using a manufacturer proprietary signalling)
- ISDN line interfaces, used to connect ISDN terminals *(e.g.* ISDN telephones, ISDN video-terminals, FAX-G4, etc.). These interfaces uses the well known CCITT Q.931 signalling protocol and can provide access to only one user *(e.g.:* a 2B+D point-to-point), or be shared by multiple users (*e*.*g*.: a 2B+D point-to-multipoint, or a 30B+D).
- Channel Associated Signalling (CAS) line interfaces, used normally to connect external equipment (*e.g*.: DECT radio exchange servers) that serve (and concentrate traffic from) multiple subscribers.
- DECT line interfaces, used to connect integrated DECT base stations that provide access to cordless extensions using DECT protocol.
- Point-to-point Data interfaces, used to connect data extensions.
- Point-to-multipoint Data interfaces, used not only to connect with telephony extensions, but to connect multiple devices with varied capabilities, such as VoIP telephony endpoints (that use H.323, SIP or other packet-network based VoIP telephony protocol), telecommunication and/or telephony servers (such as Call Distribution Server, Voice Server, H.323 Gatekeeper, SIP server, etc.), and any other kind of terminal or server that are interconnected via Local Area Network (LAN) interfaces, or other well known data network interfaces, and that uses TCP/IP UDP/IP, ATM or other well known transport/network protocol stack to interwork with the rest of the system. In the particular case of an IP-PBX, this kind of interfaces are the one used to interconnect the various VoIP terminals among them and also with the control server (or servers) that performs the control and/or supervision tasks of the PBX.

**In a first ASPECT [1]** of this invention, in order to provide the corporate MSs with access to the PBX's basic services (including making and receiving calls), a Bluetooth interface in the MS is used to communicate (call and service control signalling, as well as media transfer) directly with the PBX. So the PBX is provided with integrated Bluetooth interfaces (IBT) as a new extension line interface type. Such a new interface type contains (at least) the so called Cordless Telephony Profile of the general Bluetooth protocol stack elements, including also the physical RF link, to communicate (call and service control signalling, as well as media transfer) with the corporate MS.

An integrated interface of such type will be hereinafter referred as IBT.

Also the generic term access unit can be used to refer hereinafter an IBT.

**According to another ASPECT [2]** of the invention, in order to provide the corporate MSs with access to the PBX's basic services (including making and receiving calls) without any kind of modification needed in the PBX, the traditional extension lines interfaces of the PBX are provided with gateways (GWs). Such GWs will convert the Bluetooth radio signals, protocol and media format to the signals, protocols and media format already supported by today's PBX as extension line interfaces (the end-user terminal interfaces), and vice-versa. In the Bluetooth side of the interface, such GW will contain (at least) the so called Cordless Telephony Profile of the general Bluetooth protocol stack elements, including also the physical RF link, to communicate (call and service control signalling, as well as media transfer) with the corporate MS.

A GW interface unit of such type will be hereinafter referred as BTGW.

Also, and together with the IBT cited in the previous aspect [1], BTGW can hereinafter be referred with the generic term access unit.

**According to another ASPECT [3]** of the invention, there can be two different ways for a corporate MS to register its presence (log-on) in the PBX and, once registered, to access to the PBX's services (including making and receiving calls). This aspect is primarily intended to get the PBX aware on the registered corporate MSs, as well as to get it aware of the location of the physical connection (extension line interface) it has to use to communicate *(e.g.:* to place further incoming calls) with each one of them.

Fixed access way (FIXA) implies that only a certain user, or group of users can register and access to the PBX from a certain access unit.

Flexible access way (FLEXA) implies that any user can register and access to the PBX from any of the access units.

Both kind of accesses ways: FIXA and FLEXA, can coexist in the same PBX. That is to say, belonging from the same PBX, there can be access units that implement FIXA access and others access units that implement FLEXA.

**According to another ASPECT [4]** of the invention, the PBX is provided with different methods and means to identify the state of the connection (i.e.: present/available or absent/unavailable) of each corporate MSs. This aspect is primarily intended to get the PBX aware of if a given call to a corporate MS can be placed in the corresponding extension line interface or, if instead, such call should be treated in other way; *e*.*g*.: forwarded to other destination, since such MS is not available (e.g.: the MS is outside the coverage area of the access unit).

With the help of this aspect, the present state-of-the-art techniques that applies in today's PBX to deal with incoming calls to not-available telephone extensions *(e.g.:* extensions that are switched-off or disconnected), can also be available for corporate MS.

**According to another ASPECT [5]** of the invention, the PBX is provided with methods and means to handle the corporate MS's identification (i.e.: its telephone extension number) of each corporate MS that will be used when it is registered in the PBX without any kind of additional number translation.

This aspect is primarily intended to make possible for other party to address (to call) and to identify (*e.g.*: as calling or connected party) the corporate MS by means of a number which belongs to the PBX's number series for its extension realm, and which is not the MSISDN number used normally to address a MS from any public network (PSTN, ISDN, GSM, etc.)

The term "other party" means a telephone extension, which belongs to the PBX (including also a corporate MS), or which belongs to another PBX or network (VPN, PSTN, ISDN, GSM, etc.).

With the help of this aspect, at calls to/from corporate MS, there will not be need of additional number translation to/from the corresponding mobile phone number of the corporate MS (*e.g.*: MSISDN) and the corresponding internal telephone number for such MS when registered in the PBX.

Also, with the help of this aspect, any existing method in the present state-of-the-art to associate a given telephone number with a given name (*e.g.*: user name, company name, or any other text identifier), will automatically be available for the corporate MS.

Also, considering that telephone extensions in today's PBXs can be reached from other network (connected directly or indirectly to the PBX) by means of a prefix number (that address the whole PBX's extension domain), and considering that, normally, today's PBXs use to have some (or all) of its extension number series defined into the direct-in-dial (DID) number series of the connected exchange/s; then, with the help of this method, corporate MSs will be able to be addressed (called) and identified (*e.g.*: as calling or connected party) from any other network connected directly or indirectly to the PBX with other telephone number which is not its MSISDN number, and which belongs to PBX's number series for telephony extensions.

**According to another ASPECT [6]** of the invention, the PBX is provided with methods and means to handle incoming calls towards the corporate MSs.

This aspect is primarily intended to do not lose incoming calls to a corporate MS received in the PBX from another internal party (including also a corporate MS) or from another external party belonging to any other network connected (directly or indirectly) to the PBX (another PBX, VPN, PSTN, ISDN, GSM, etc). So, the PBX can forward the incoming call either: to the MSISDN number of such corporate MS (thus the MS will receive the call through the public mobile network; *e.g.*: GSM), or it can forward the call to another answering position, internal to the PBX (*e.g.*: secretary, voice mail system), or external.

**According to another ASPECT [7]** of the invention, the corporate MSs and/or the PBX are provided with different methods to perform a bearer selection for handling outgoing calls made from the corporate MSs. With the help of such methods, an outgoing call made from a corporate MS registered in the PBX, can be routed either: via the corresponding access unit through the PBX, or through the public mobile network.

This aspect is mainly (but not exclusively) intended to select the least cost path for a call that, in most of the cases, will be to route the outgoing call via the access unit through the PBX.

This aspect will apply only when the corporate MS is inside the office environment; that is to say: when it is registered in the PBX via any kind of access unit. Thus, calls from the corporate MS when it is outside the office environment (that is: not registered in the PBX), will all be routed in the normal way through the public mobile network.

Already existing least cost routing functions in today's PBX can continue working without any interaction with this aspect.

**According to another ASPECT [8]** of the invention, and in order to fully integrate the corporate MSs as terminals of the PBX, methods and means are provided so that corporate MSs gain fully access to, at least, the same services/features nowadays available for the already existing telephone extensions belonging to a PBX.

With the help of this aspect, services provided today by a PBX for the telephone extensions belonging to its extension realm, such as activation/deactivation of call forwarding, intrusion, multiconference (call with more than 3 parties simultaneously), call pick-up, transfer, etc., could be invoked also from any corporate MS, regardless the type of access unit used to connect with the PBX, and be served from the PBX as it does for the other existing types of telephone extensions.

**According to another ASPECT [9]** of the invention, the corporate MSs and/or the PBX are provided with different methods that, as soon as a MS successfully registers (logs-on) in the PBX through an access unit, the calls made to its MSISDN number are forwarded to the PBX directory number for such MS defined in aspect [5].

Next, to facilitate a better understanding of this description and forming an integral part of it, a series of figures are included with illustrative and non-limiting character, representing the object of the invention.

### BRIEF DESCRIPTION OF THE DRAWINGS

The features, objects and advantages of the invention will become apparent by reading the detailed description in conjunction with the accompanying drawings, in which:

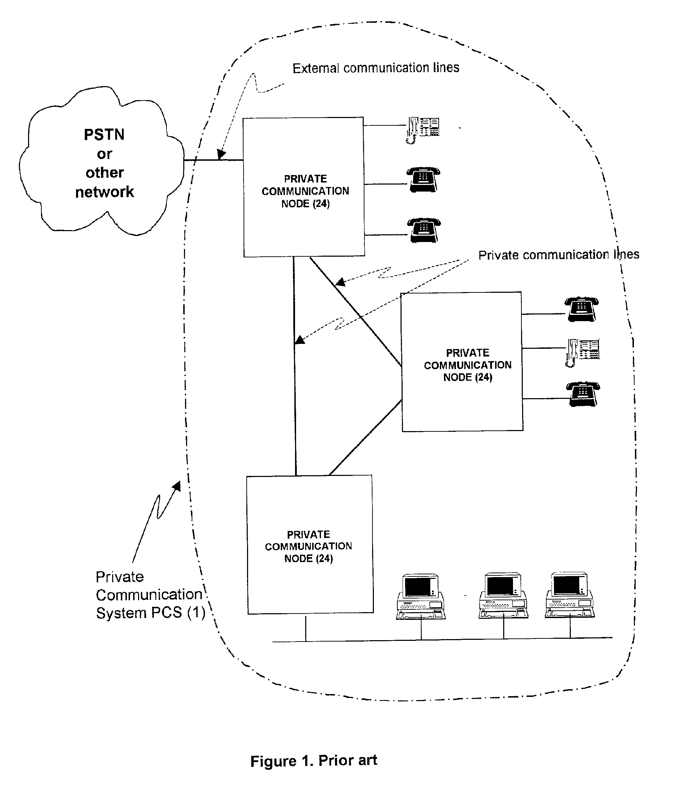

- **Figure 1:**: is a schematic representation of a prior-art Private Communication System (PCS).

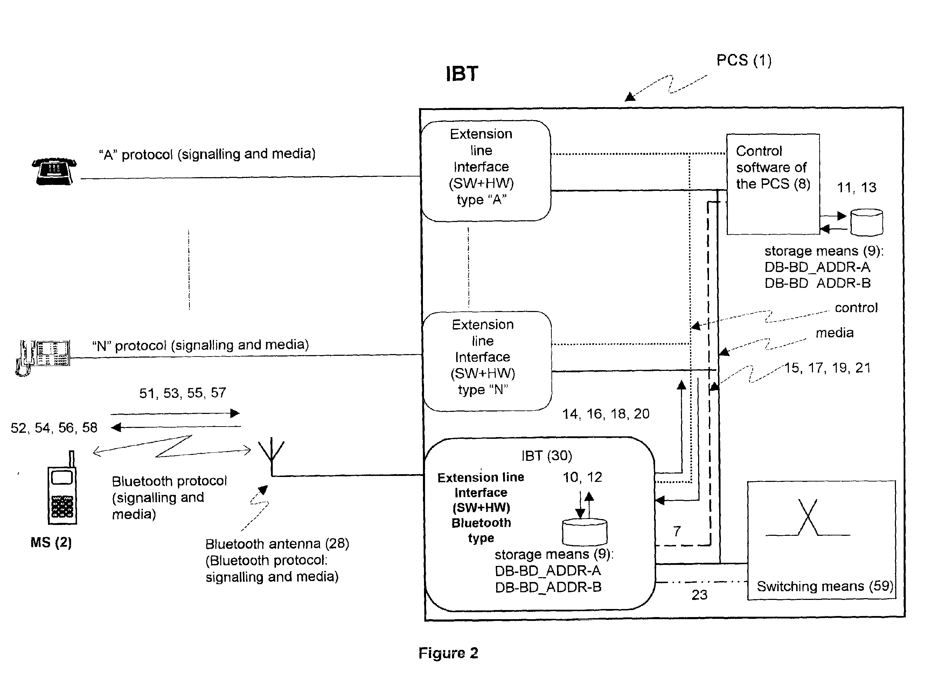

- **Figure 2:**: is a schematic functional block representation of an aspect (aspect-1) of the present invention where a PCS node is provided with Integrated Bluetooth Access (IBT).

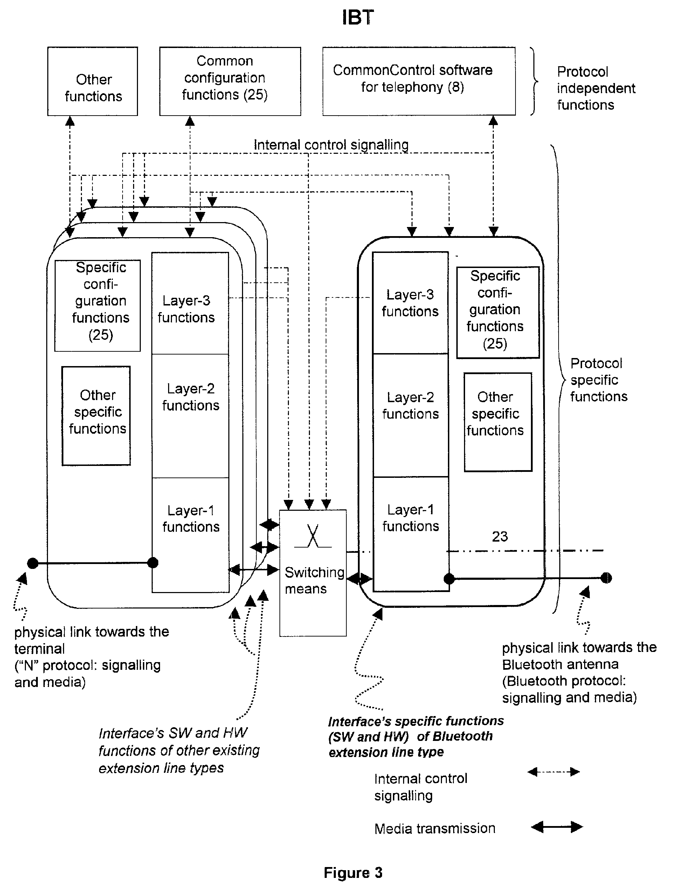

- **Figure 3:**: is a detailed functional block representation of an aspect (aspect-1) of the present invention where a PCS node is provided with Integrated Bluetooth Access (IBT).

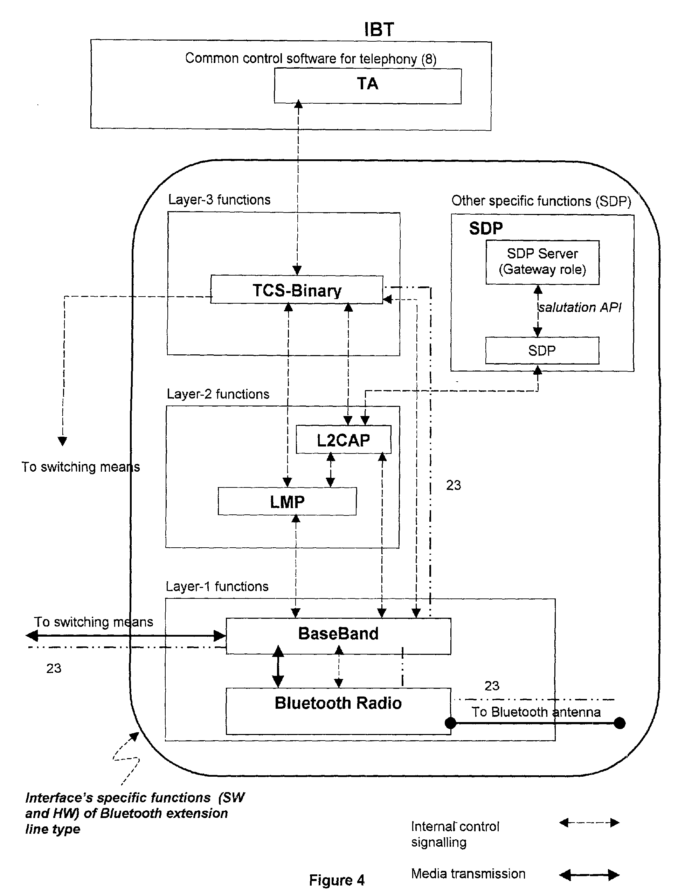

- **Figure 4:**: is a functional block representation of the Cordless Telephony Profile elements integrated in the IBT.

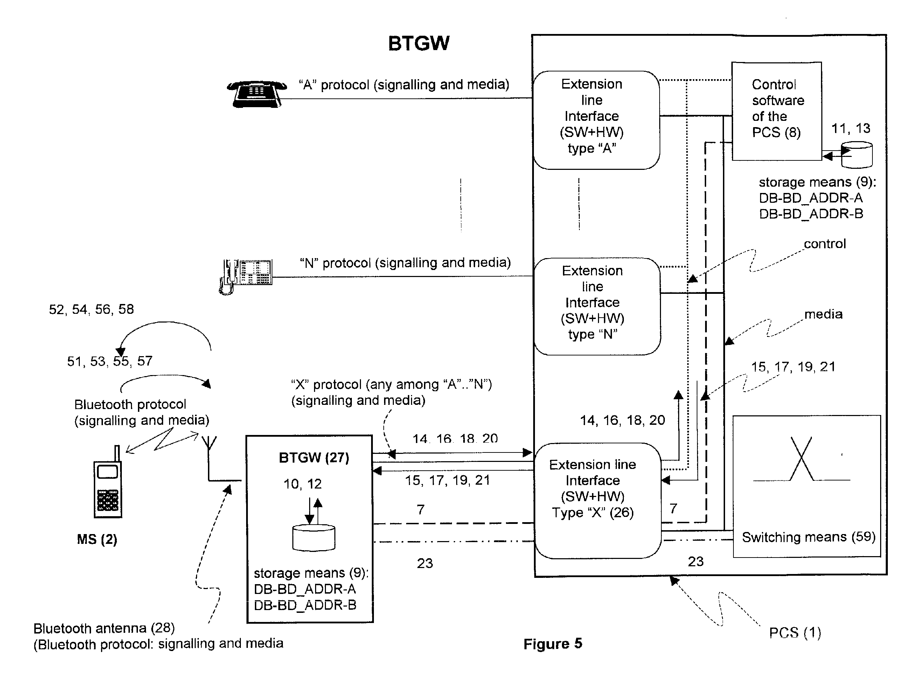

- **Figure 5:**: is a schematic functional block representation of an aspect (aspect-2) of the present invention where a PCS node is provided with Bluetooth Gateways (BTGW).

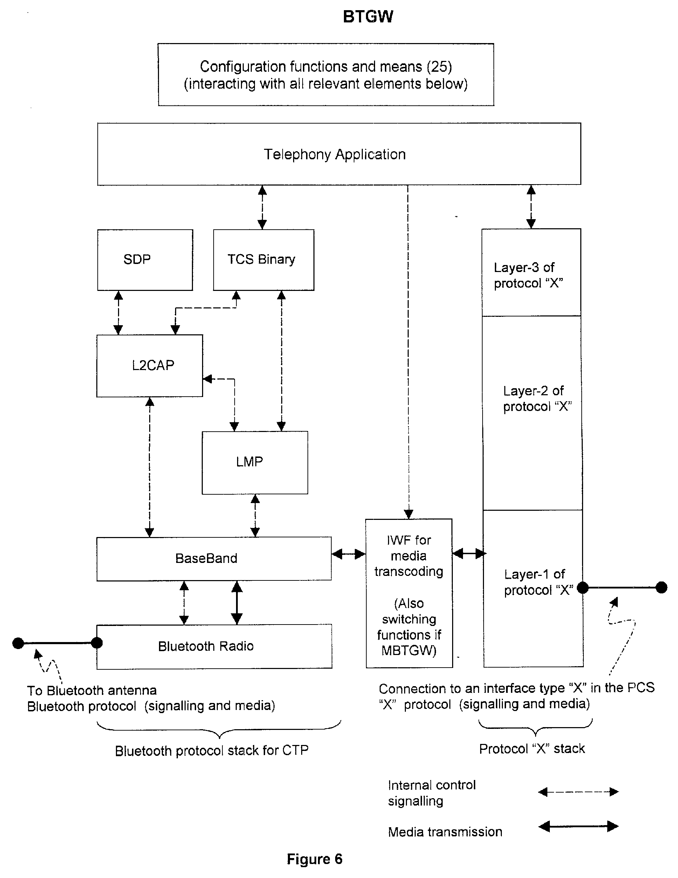

- **Figure 6:**: is a detailed functional block representation of an aspect (aspect-2) of the present invention where a PCS node is provided with Bluetooth Gateways (BTGW) showing the structure of said Bluetooth Gateway.

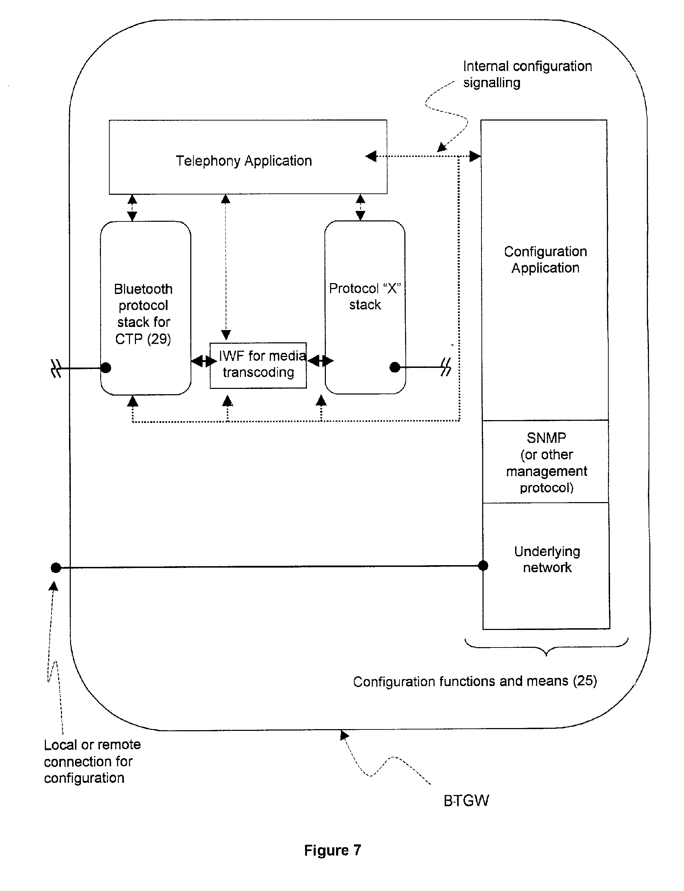

- **Figure 7:**: is a functional block representation of the configuration functions and means in the BTGW.

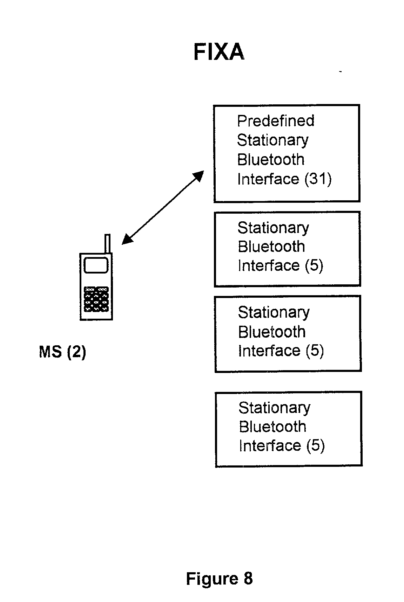

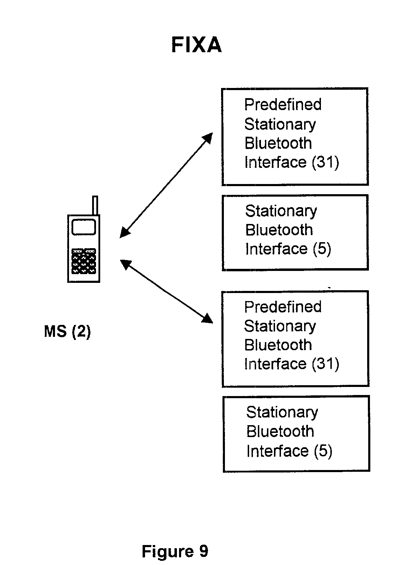

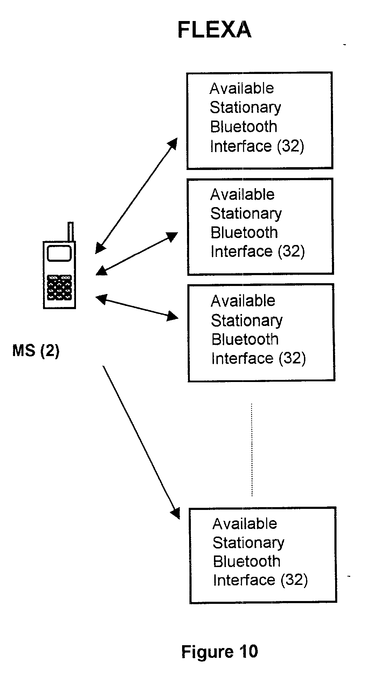

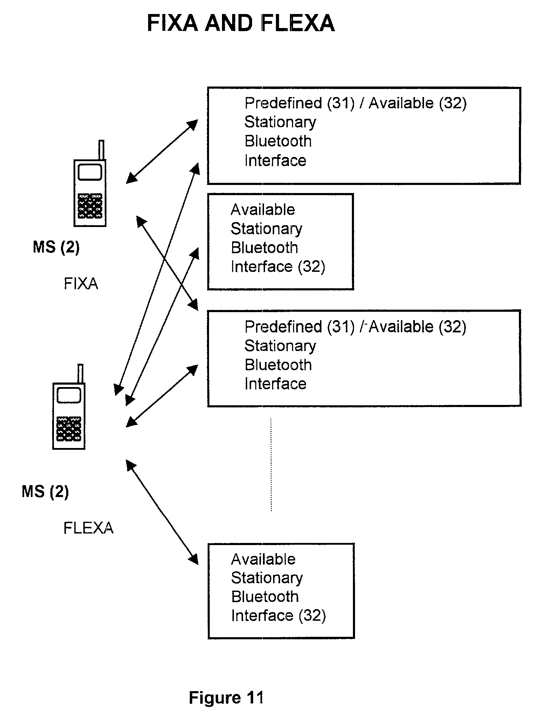

- **Figures 8, 9, 10 and 11:**: are schematic functional block representations of an aspect (aspect-3) of the present invention, showing different ways for a corporate MS to register.
- **Figures 12, 13, 14 and 15:**: are flow details of the different methods of one aspect (aspect-3) of the present invention covering different access/register methods for corporate MSs.

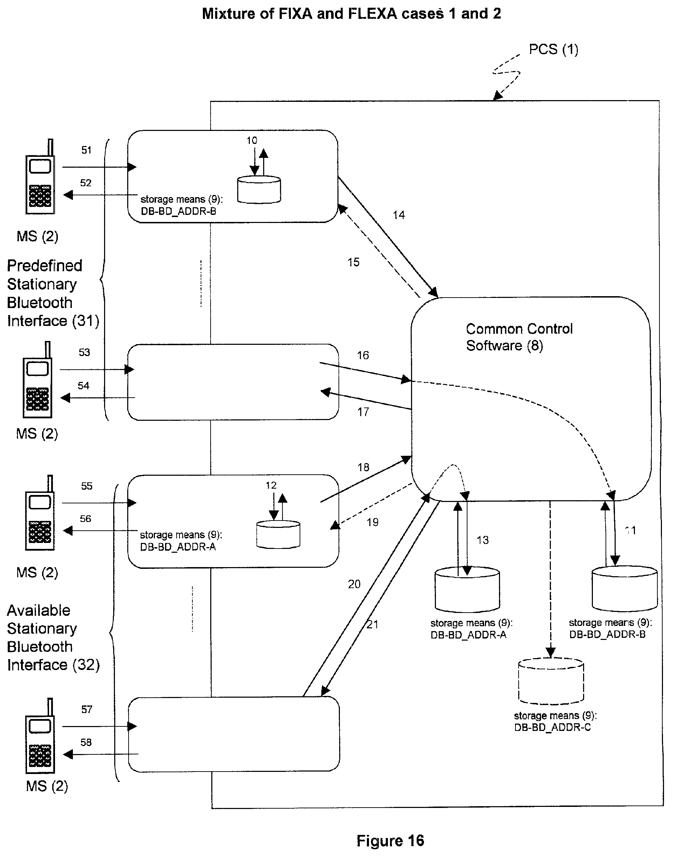

- **Figure 16:**: is a functional block representation of the different methods of one of the aspects (aspect-3) of the present invention covering different access/register methods for corporate MSs.
- **Figure 17:**: is a functional block representation of one of the methods described in one aspect (aspect-4) of the present invention.

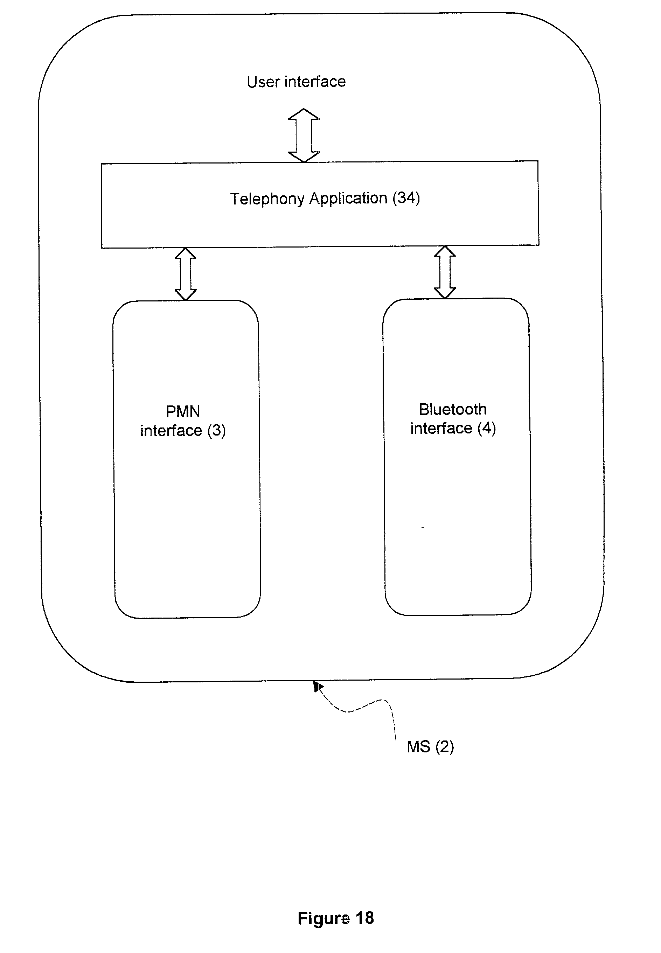

- **Figure 18:**: is a functional block representation showing the relationship between some elements in a corporate MS for some aspects (aspects-7 and 9) of the present invention.

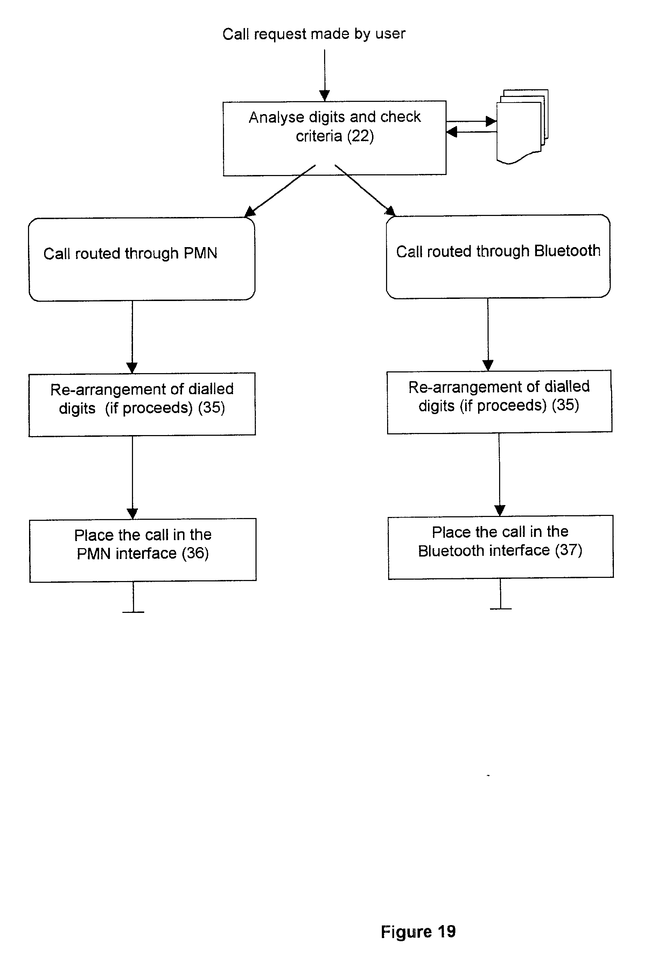

- **Figure 19:**: is a flow chart representing one of the methods of one aspect (aspect-7) of the present invention.

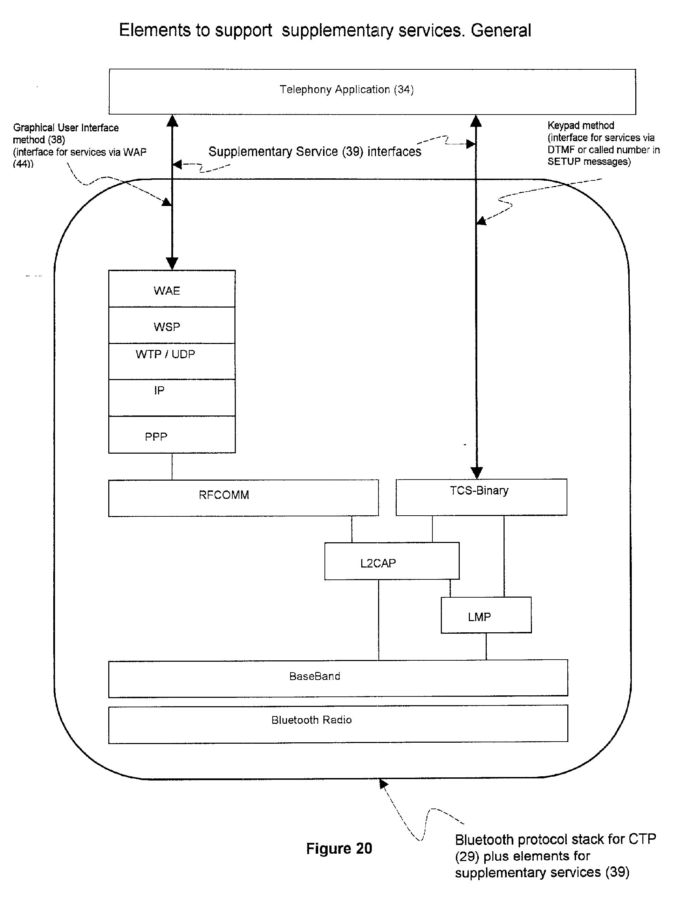

- **Figure 20:**: is a detailed functional block representation of the elements needed to be added to the Bluetooth Cordless Telephony Profile stack for one aspect (aspect-8) of the present invention.

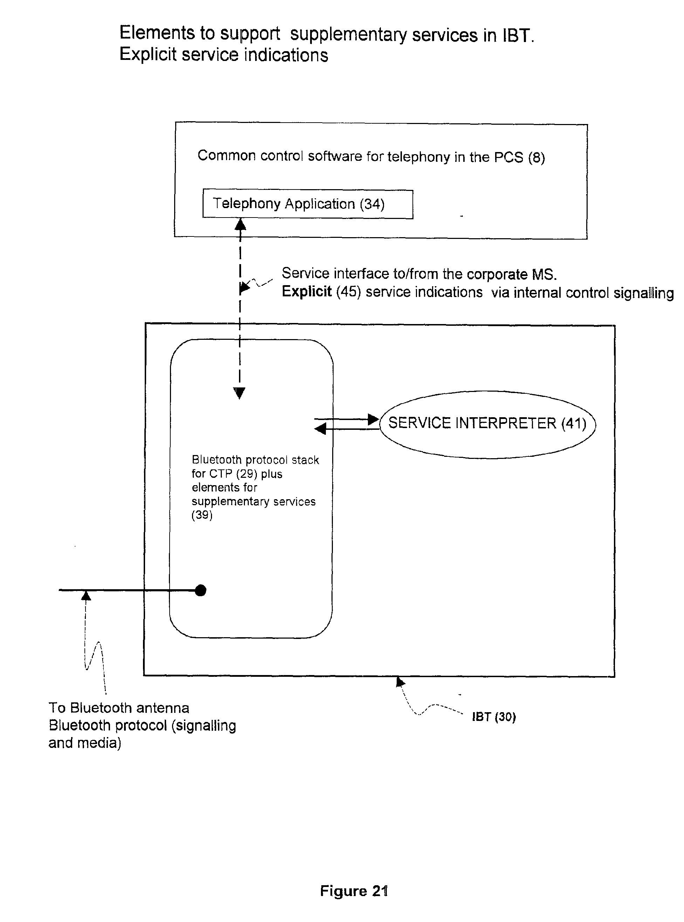

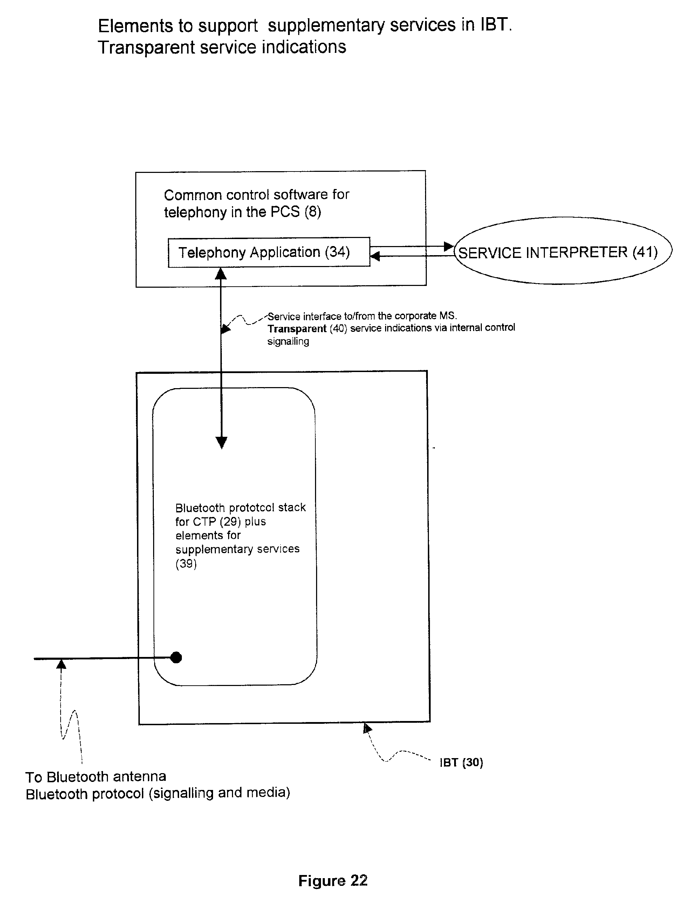

- **Figures 21 and 22:**: are functional block representations showing the relationship between some elements in a PCS node for one aspect (aspect-8) of the present invention.

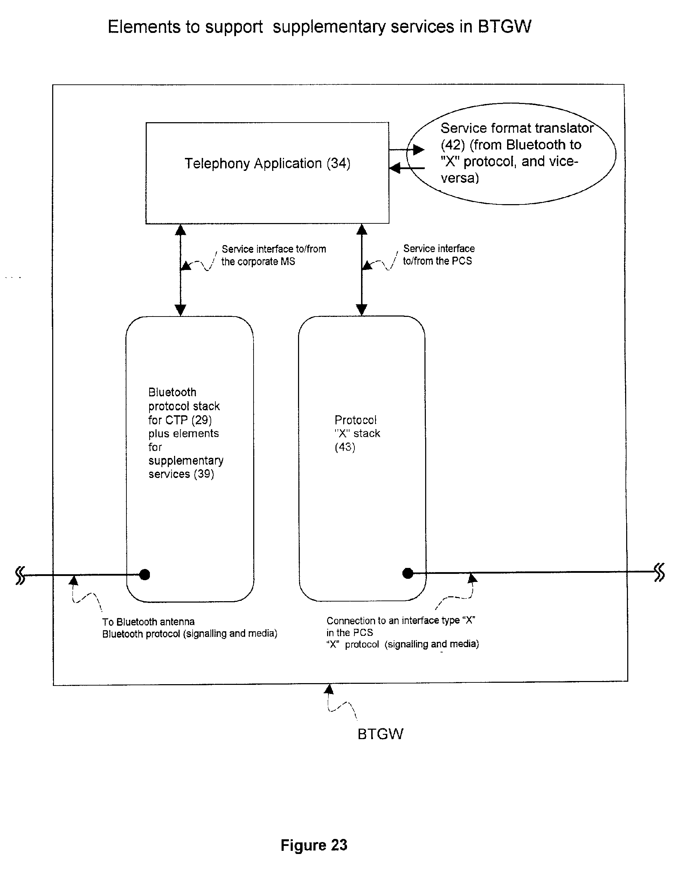

- **Figure 23:**: is a functional block representation showing the relationship between some elements a BTGW for one aspect (aspect-8) of the present invention.
- **Figures 24, 25 and 26:**: are flow details of the different methods one aspect (aspect-9) of the present invention covering methods to provide calls to the corporate MS be received through the PCS.

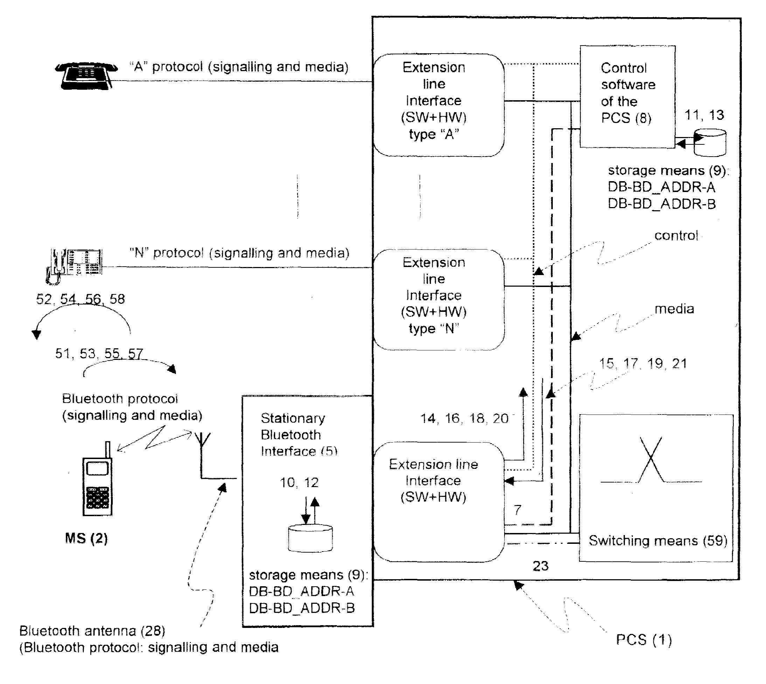

- **Figure 27:**: is a generalisation summarising figures 2 and 5.

### DESCRIPTION OF AN EMBODIMENT OF THE INVENTION

Now, all the aspects that found the present invention shall be explained in detail.

In such detailed explanation, and mainly for the sake of a greater simplicity, the general term PBX shall be cited to refer the legacy PCS node where the corporate MS is housed, regardless if such PBX and their served terminals use, for signalling and media transfer, exclusively circuit switching oriented technologies (first embodiment), or if they use exclusively packet switching oriented technologies (second embodiment) or a mixture of both (third and preferred embodiment). Nevertheless, and if it is not specified a particular method or mean, it shall be pretty obvious for any person skilled in the art how to apply/extend such methods and means for the particular case where the legacy PCS is a traditional PBX (first embodiment), a VoIP telephony system (IP-PBX referred in the second embodiment), or a mixture of both (third and preferred embodiment).

### ASPECT [1] :

In this aspect, the corporate MSs are provided with access to the PBX's basic services, including making and receiving calls, by means of Bluetooth interfaces integrated in the PBX.

As mentioned earlier, a PBX handles today a variety of different interfaces, each one connecting the PBX with one or more "terminals" at the other end. These "terminals" can be end-user terminals (voice and/or multimedia telephony extensions), other telephony node (another PBX, PCS (1) or a communication node belonging to another network), or a telecommunication and/or telephony servers (such as Call Distribution Server, Voice Server, H.323 Gatekeeper, SIP server, etc).

Specifically, interfaces serving end-user terminals, are usually referred as extension line interfaces. These interfaces can also be of a variety of types depending on the end-user terminal type they serve (*e.g*.: POTS, ISDN, CAS, H.323, SIP, proprietary -or vendor specific-, etc.), and they are implemented in the PBX system by means of specific software and hardware.

To accomplish this aspect, the PBX is provided with integrated Bluetooth interfaces (30) (IBT hereinafter) as a new extension line interface type, that will be implemented by means of specific software and hardware, that will be added to be handled among the existing ones in the PBX, and that will serve to the corporate MS's extension types. So, by means of this interface the corporate MS will exchange call control signalling, service control signalling directly with the PBX's control software, and, when needed, will exchange media information (*e.g*.: audio information) directly with the PBX's switching means (59).

Each IBT (30) will found its own Bluetooth piconet that will provide access to the corporate MSs to the PBX services.

This implies new software and hardware elements in the PBX to implement (at least) the components defined in the so called Cordless Telephony Profile (CTP) (29) of the general Bluetooth protocol stack, according to the gateway configuration/role defined in the CTP (29). Such elements, that also include the physical RF link, will be used to communicate (call and service control signalling, as well as media transfer) with the corporate MS.

A list of such components, together with the principles for their allocation and implementation in the PBX, is now given:
- The Telephony Application (TA) element of the CTP (29) defined by Bluetooth specifications, can be performed by the present telephony control common software of the PBX without any substantial modification for the scope of the present aspect. This software is, in today's PBX, already in charge of control and/or supervision for the connections, signalling and services demanded for the different interfaces (whatever type), and has slight differences, or no differences at all, when dealing with different extension line interface types. For the particular case of IBT (30) extension line interface types, they can be treated as any other extension line type.
- The TCS-Binary element of the CTP (29) defined by Bluetooth specifications, is a mere Network Layer (ISO Layer-3) communication protocol based on CCITT standard Q.931. This kind of elements (Layer-3 communication protocols) are part of the present state-of-the-art in any PBX that has to deal with different communication protocols used in the different interfaces (whatever type) it handles. Such elements are usually implemented by means of different software modules (or software functions), each one specialised in a particular Layer-3 communication protocol; although implementation in firmware (located in the memory of the board that contains the physical layer of the specific communication protocol) is also used in the present state-of-the-art.
   In the PBX software architecture, this kinds of elements (software modules implementing Layer-3 communication protocols) belong (monitored and driven/controlled by) on the previously cited telephony control common software of the PBX; and they, in turn, handle (monitor, drive and control) the lower layers (layers 2 and 1) of their respective communication protocols.
   So, in a particular PBX, a new software module that performs the functions required by TCS-Binary protocol shall be placed as a new element serving a specific Layer-3 protocol.
   So, by following the same structuring and interworking rules with the rest of the system that applies -in a particular PBX- for software modules (or software functions) that performs Layer-3 functions of communication protocols; it should be pretty obvious for any person skilled in the art how to introduce a new software module (or software function) that performs the functions required by TCS-Binary protocol within a particular software architecture of a particular PBX that already handles one or more Layer-3 communication protocol.
   Other option is to re-use an existing software module (or software function) that already is in charge of Q.931-like protocols in the PBX.
- The Service Discovery Protocol (SDP) element of the CTP (29) defined by Bluetooth specifications provides a means for the applications (Cordless Telephony application in this case) to discover which services are available, and to determine their characteristics. In the scope of this invention, the PBX shall be provided with, at least, the SDP-server part defined by Bluetooth specifications that must contain, at least, a service-attribute defined in CTP (29) for the gateway configuration/role. This element can be implemented as a stand-alone software module that will be place at the same functional level in the PBX software architecture as the module implementing the TCS-Binary element, and that will interwork with such element, and with the Logical Link Control and Adaptation Protocol (L2CAP) element according to the Bluetooth specification for CTP (29).
   Other option could be to merge it with the software module implementing the TCS-Binary element.
- The lower layer elements (ISO layers 2 and 1) of the CTP (29) defined by Bluetooth specifications: Logical Link Control and Adaptation Protocol (L2CAP), Link Manager Protocol (LMP), BaseBand and Bluetooth Radio, are mere ISO layer-2 protocols dealing with data link management (LMP and L2CAP) and ISO layer-1 protocols dealing with physical aspects of the connections (BaseBand and Bluetooth Radio). In particular, the layer-1 elements BaseBand and Bluetooth Radio (as in most communication protocols) are used to convey, not only call and service control signalling in both directions (from corporate MS to PBX, and vice versa), but also media *(e.g.:* voice) in one or in both directions (from corporate MS to PBX switching means (59), and vice versa) when needed (upon demand of upper layers).
   This kind of elements (Layers 2 and 1 of communication protocols) are part of the present state-of-the-art in any PBX that has to deal with different communication protocols used in the different interfaces (whatever type) it handles. Due to the low-time response requirements for Layers 2 and 1 functions, such elements are usually realised by means of different hardware and firmware modules (or firmware functions) that are allocated in the specific board(s) or physical device(s) that connect (using whatever mean wired or wireless) the terminal (whatever type) with the control and switching means (59) of the PBX serving to such terminal; also such boards (or physical devices) are provided with an interface (board interface) that is used to exchange control and media information with the rest of the PBX elements (software and hardware), using a data-format coding and physical communication means that -in most of the cases- is common for all boards (or physical devices) of this type, regardless the specific layers 1 and 2 of the protocol they implement. Such hardware and firmware modules in the cited boards (or physical devices) implements, not only the data link layer (layer-2) and the physical layer (layer-1) of every specific communication protocol, but also the transcoding and adaptations functions for media exchange between the terminal (whatever type) and the switching means (59) of the PBX serving such terminal.
   So, in a particular PBX, a new board (or physical device) type containing hardware and firmware modules needed to implement the functions required by L2CAP ,
   LMP, BaseBand and Bluetooth Radio shall be placed as a new element serving a specific Layer-2 and Layer-1 protocol, as well as the transcoding and adaptations functions for media exchange between the corporate MS and the switching means (59) of the PBX.
   So, by using the same board-firmware architecture used in a particular PBX, and also by using the cited common board interface with the rest of the PBX elements; it should be pretty obvious for any person skilled in the art how to introduce a new firmware module (or firmware function) that performs the functions required by the Layer-2 and Layer-1 specific elements of Bluetooth cited above within a particular board-firmware architecture of a PBX that already handles one or more Layer-2 and Layer-1 communication protocol. Besides, there is already commercially available built-in solutions (including hardware and firmware) that implements the lower layer elements (ISO layers 2 and 1) of the CTP (29) defined by Bluetooth specifications: L2CAP, LMP, BaseBand and Bluetooth Radio that can be placed in any existing board-firmware architecture used presently by the PBX.

Regarding configuration means *(i.e.:* operation and maintenance means) needed for this new extension line interface type, the presently used configuration means's structure (common and/or type-specific) for extension line interfaces, that apply in a particular PBX, will apply also for the new extension line interface type.

In current PBX, there use to be common configuration means for extension line interfaces, that generally apply regardless the specific communication protocol and particular characteristics of the interface type; and/or - when needed- specific configuration means, that are specific for every communication protocol and particular characteristics of the interface type.

So, in a particular PBX, the presently used common configuration means used for extension line interfaces will apply also for the new IBT (30) interface type. This includes also interworking rules for interface activation and allocation (of physical board/device and related software/firmware) in order to bring it ready to carry out telephony/data traffic with the corporate MS.

Regarding the type-specific configuration means for IBT (30) interface type, new configuration means will be needed. Such new type-specific configuration means for IBT (30) will, in the scope of the present aspect, provide data related to capacity of the physical parts of each IBT interface (30); that is to say: the number of corporate MSs able to be connected concurrently (even with simultaneous conferences -calls-) to the same IBT (30) physical interface. For this purpose the required IBT (30) for this invention can be of two types:
- Single IBT (30) (SIBT), having capacity to hold (to control and to serve) only one corporate MS per IBT (30) physical interface; that is to say: only one corporate MS in the piconet belonging to a given IBT (30) physical interface.
   The maximum number of simultaneous conferences (calls) to/from such MS (2) is a mater of internal implementation option both: in the MS (2) and in the PBX. The most simple solution is to support only one call; so, in this case, if the corporate MS has already one call established, the PBX will consider it as busy for subsequent incoming calls towards this corporate MS. Therefore, with the help of this feature, automatic busy services available for telephony extensions (such as call forwarding on busy, etc.) can be served by the PBX to the "busy" corporate MS.
- Multiple IBT (30) (MIBT), having capacity to hold (to control and to serve) concurrently more than one corporate MS per IBT physical interface; that is to say: more than one corporate MS in the piconet belonging to a given IBT physical, being the limit imposed by Bluetooth technology (up to 7).
   The maximum number of simultaneous conferences (calls) to/from each MS (2) held by one MIBT is a mater of internal implementation option both: in the MS (2) and in the PBX. The most simple solution is to support only one call per MS (2) held in one MIBT; so, in this case, if a corporate MS has already one call established, the PBX will consider it as busy for subsequent incoming calls towards this corporate MS. Therefore, with the help of this feature, automatic busy services available for telephony extensions (such as call forwarding on busy, etc.) can be served by the PBX to the "busy" corporate MS.
   A MIBT MIBT shall behave as the master device in its Bluetooth piconet.

Both kinds of IBT: SIBT and MIBT can hereinafter be referred as access units.

### Summarising, according to the main points of Aspect 1:

The apparatus for integrating mobile telephones as terminals of a PCS (Private Communication System) (1) is provided with control means including extension realm control means. Said apparatus comprises integrating means for integrating at least one MS (Mobile Terminal) (2) into the PCS (1) as an admissible MS. Said MS (2) is equipped with a first interface (3) for communicating with at least one PMN (public mobile network) (3a) and with a second interface which is a Bluetooth interface (4).

Said integrating means comprise at least one stationary Bluetooth interface (5) connected to Bluetooth radio transceiver means (6) which have A limited radio coverage area for communicating with each admissible MS located within the radio coverage area. Said stationary Bluetooth interface (5) comprises first transcoding means (7) for enabling communication between the PCS control means (8) and said Bluetooth radio transceiver means (6).

The stationary Bluetooth interface (5) may be integrated in the PCS (1) (connected in this way named as IBT (Integrated BlueTooth) (30)).

Said IBT (Integrated BlueTooth) (30) comprises:
- a RF link to antenna (28) operating under Bluetooth protocol
- at least the elements of the CTP (29) defined by Bluetooth specifications
- transcoding means (7, 23) for enabling media transfer and control signalling between the elements of the CTP (29) defined by Bluetooth specifications and
- the control means and switching means (59) supported by the PCS (1).

### ASPECT [2] :

In this aspect, the corporate MSs are provided with access to the PBX's basic services, including making and receiving calls, by means of Bluetooth interfaces acting as gateways between Bluetooth protocol and any extension line communication protocol used already in the PBX; thus, without affecting, nor requiring any modification, in any existing PBX's component (interface type, specific hardware, specific software, etc.) nor in its methods (configuration, operation, maintenance, etc.).

To accomplish this aspect, the physical connection means of traditional (existing) extension lines interfaces of the PBX are connected to gateways (GWs) (27). Such GWs (27) will convert the Bluetooth radio signals, protocol and media format to the signals, protocols and media format already supported by today's PBX as extension line interfaces (the end-user terminal interfaces), and vice-versa. A GW (27) of such type will be hereinafter referred as BTGW (27).

Regarding the protocols used, the required BTGW (27) for this invention is a device provided, in one side, with (at least) one communication protocol stack used in one of the extension line interfaces existing in today's PBX to communicate (call and service control signalling, as well as media transfer) with the PBX, thus acting as any end-user terminal endpoint (telephony extension, multimedia extension, etc.) from the PBX's point of view; and, in the other side, with (at least) the so called Cordless Telephony Profile of the general Bluetooth protocol stack elements (the same as cited in the previous aspect-1) to communicate (call and service control signalling, as well as media transfer) with the corporate MS.

To perform the needed transfer of format for signals, protocol and media format from Bluetooth to the extension line communication protocol used, and vice-versa, some interworking functions (IWFs) will be needed in the BTGW (27). A description of such IWFs will now be given with reference to elements of the Cordless Telephony Profile cited in the previous aspect (1):
- The TA (34) element can be common for both sides of the interworking (Bluetooth and extension line communication protocol used). Its final complexity and functions will depend on the extension line communication protocol used *(e.g.:* very simple for POTS, and more complex for ISDN, H.323, etc.).
   Nevertheless, and for the scope of this aspect, the TA (34) will, at least, be in charge of control and supervision for the connections (media and signalling) demanded to/from the corporate MS. To accomplish this it will interact, in one side, by means of service primitives with the TCS-Binary element, and with the BaseBand element according to Bluetooth' Cordless Telephony Profile; and, in the other side, with the Layer-3 specific protocol stack used in its interface towards the PBX, as well as with the transcoding and other media adaptation (Layer-1) and channel allocation functions needed for media interworking between both sides.
   The TA (34) will receive primitives indicating reception of messages and/or protocol events from TCS-Binary element or from the Layer-3 protocol used in the PBX side, and -after processing, and if needed- will send the corresponding primitives to the corresponding side (TCS-Binary or Layer-3 protocol used in the PBX side) for sending the corresponding message or taking the corresponding protocol action.
   Since TCS-Binary protocol is based in Q.931 (which is quite versatile and complex, and there are many communication protocols based on it), it should be pretty obvious for any person skilled in the art how the translation of primitives between the TA (34) and the Layer-3 (if existing) protocol used in the PBX side (and vice-versa) should look like: for Q-931-like protocols, it should be a direct translation (*e.g.*: SETUP-indication from one side, should be translated to SETUP request to the other side); and for simpler protocols (such as POTS), it should consist on translate message indications from the Bluetooth side to orders to electrical devices in the other side (*e.g*.: SETUP-indication or RELEASE-indication from TCS-Binary, should be translated to an order to open or close electrical loop in the POTS side).
- The TCS-Binary element will perform the same functions as described in previous aspect (1). It will interact with the TA (34) by means of service primitives that, among other functions, will be used to indicate to the TA (34) the reception of a given message (or protocol event), as well as to receive from the TA (34) a request for sending a given message (or taking a given action). Another option is that TA (34) delegates protocol message transcoding (according to explanations above) into a specific IWF located either: in the TCS-Binary element, in the Layer-3 protocol used in the PBX side of the BTGW (27), or a stand-alone IWF that interacts with the TCS-Binary and with the Layer-3 protocol used in the PBX side for mere translation purposes.
- The SDP element will have the same functions as described in previous aspect (1), and no IWF for functions related to this element is needed.
   As in the previous aspect, the BTGW (27) shall be provided with, at least, the SDP-server part defined by Bluetooth specifications that must contain, at least, a service-attribute defined in CTP (29) for the gateway configuration/role. This element can be implemented as a stand-alone software/firmware module that interworks with the TCS-Binary element, and with the L2CAP element according to the Bluetooth specification for CTP (29). Another option could be to merge it with the software/firmware module implementing the TCS-Binary element.
- The L2CAP and LMP elements will have the same functions as described in previous aspect (1), and no IWF for functions related to these elements is needed.
- The BaseBand element will need an IWF to adapt the format and coding of the media received from the MS (2) to the format and coding used in the PBX side of the BTGW (27) and vice-versa.
   This IWF will be driven by the TA (34), and will be in charge of media transcoding and channel allocation for synchronous connection oriented information flows (media flows) from the corporate MS to the PBX and vice-versa. It will also be provided with switching functions for those flows if the BTGW (27) has capacity to serve concurrently call to/from more than one corporate MS (Multiple BTGW (27) referred later in this aspect).
- The Bluetooth Radio element, since it is the endpoint of the bearer mean used to convey information (control and media transmission) to/from the corporate MS to the BTGW (27), does not need any IWF. Instead, the relevant information (control and media transmission) to/from the corporate MS will be arranged according to the bearer used in the PBX side of the BTGW (27), and vice-versa.

Regarding the capacity; that is to say: the number of corporate MSs able to be connected concurrently (even with simultaneous conferences -calls-) to the same BTGW (27), the required BTGW (27) for this invention can be of two types:
- Single BTGW (SBTGW) (27), having capacity to hold (to control and to serve) only one corporate MS; being the maximum number of simultaneous conferences (calls) to/from such MS (2) limited by internal implementation in the MS (2), and also by the capacity of simultaneous conferences (calls) supported by the interface used between the SBTGW (27) and the PBX; that is to say: limited by the extension line protocol used in such interface (e.g.: some extension line protocols consider "user busy" condition if the user has just one ongoing call, and other protocols does not have this limitation, but other based -for instance- in number of channels used in the interface). Therefore, with the help of this feature, automatic busy services available for telephony extensions (such as call forwarding on busy, etc.) can be served by the PBX to the "busy" corporate MS.
- Multiple BTGW (MBTGW) (27), having capacity to hold (to control and to serve) concurrently more than one corporate MS; being the maximum number of simultaneous conferences (calls) to/from the connected MSs limited by internal implementation in the MS (2), and also by the capacity of simultaneous conferences (calls) supported by the interface used between the MBTGW (27) and the PBX; that is to say: limited by the extension line protocol used in such interface (*e.g.*: some extension line protocols consider "user busy" condition if the user has just one ongoing call, and other protocols does not have this limitation, but other based -for instance-in number of channels used in the interface). Therefore, with the help of this feature, automatic busy services available for telephony extensions (such as call forwarding on busy, etc.) can be served by the PBX to the "busy" corporate MS.
   A MBTGW (27) shall behave as the master device in its Bluetooth piconet.

The configuration control of BTGWs (27) can be performed, as an implementation option, either: in every access unit (SBTGW or MBTGW) (27), by means configuration parameters and a local configuration interface, or, in a centralised manner, in the PBX control software. In the latest case, a well known protocol for remote configuration/management (such as SNMP) can be used.

Both kinds of BTGW (27): SBTGW and MBTGW can hereinafter be referred as access units (same as stated before for SIBT and MIBT).

### Summarising, according to the main points of Aspect 2:

The apparatus for integrating mobile telephones as terminals of a PCS (Private Communication System) (1) is provided with:
- Second transcoding means (23) for enabling media transfer between the PCS switching means (59) and said Bluetooth radio transceiver means (6).
- Configuration control means (25) provided by the stationary Bluetooth interface (5) by means of configuration parameters and a local, remote or a combination thereof, configuration interface providing at least data related to the capacity of the physical parts of each stationary Bluetooth interface (5) and the number of integrated MSs able to be connected concurrently). Said configuration control means (25) of the stationary Bluetooth interface (5) are located either in every stationary Bluetooth interface (5) or centralised in the PCS control software (8) or a combination thereof.
- At least one stationary Bluetooth interface (5) belonging to at least one of the types selected from:
   - Single stationary Bluetooth interface (5) which control and serve one integrated MS
   - Multiple stationary Bluetooth interface (5) which control and serve more than one integrated MS.

   Said stationary Bluetooth interface (5) is connected to an already existing extension line type interface (26) of the PCS (1) (connected in this way named as BTGW (BlueTooth Gateway) (27)). Said BTGW (BlueTooth Gateway) (27) comprises:
- A RF link to antenna (28) operating under Bluetooth protocol.
- At least the elements of the CTP (29) defined by Bluetooth specifications.
- Transcoding means (7, 23) for enabling media transfer and control signalling between the elements of the CTP (29) defined by Bluetooth specifications and the protocol "X" supported by said already existing extension line type interface (26) in the PCS (1).

### ASPECT [3] :

According to this aspect, there can be two different ways for a corporate MS to register its presence (log-on) in the PBX and access to the PBX's services (including making and receiving calls). The methods for accomplishing the register notification between an access unit and the PBX, will be disclosed later in Aspect-4.

This aspect is primarily intended to get the PBX aware on the registered corporate MSs, as well as to get it aware of the location of the physical connection (physical extension line interface) it has to use to communicate (*e.g.*: to place further incoming calls) with each one of them:
- Fixed access way (FIXA) implies, in the case of a SIBT or a SBTGW (27), that only a certain authorised user can register and access to the PBX from a certain SIBT or SBTGW (27); and, in the case of a MIBT or a MBTGW (27), it implies that only a certain group of authorised users can register and access to the PBX from a certain MIBT or MBTGW (27).
- Flexible access way (FLEXA) implies that any authorised user can register and access to the PBX from any of the access unit (SIBT, MIBT, SBTGW (27) or MBTGW (27)).

Both kind of accesses: FIXA and FLEXA, can coexist in the same PBX. That is to say, belonging from the same PBX, there can be SIBTs and/or SBTGWs (27) with FIXA access and others with FLEXA. Similarly, belonging from the same PBX, there can be MIBTs and/or MBTGWs (27) with FIXA access and others with FLEXA.

Furthermore, the same access unit, if capable to support multiple users (MIBT or MBTGW (27)) can implement both kind of accesses: FIXA and FLEXA (*e.g.*: a certain MIBT or MBTGW (27) can accept both: registration of a set of predefined users, and have capacity to accept registration of a certain number of non-predefined users).

In any case, FIXA or FLEXA, the standardised access mechanisms defined in Bluetooth shall be used to authenticate (recognise/identify) the corporate MS of a particular user by means, primarily, of its individual (and unique) BD_ADDR (which is known by the access unit in the "Device Discovery" and "Link Establishment" phases defined by Bluetooth) , and so to guarantee that such a particular user can access to the PBX through any Bluetooth access unit (SIBT, MIBT, SBTGW (27) or MBTGW (27)) only if such a user is allowed to do it according to previously configured data (*i.e.*: defined set of users allowed to access the PBX).

The control and configuration of these kinds of accesses, that is to say: the entity/entities deciding: what kind of access (FIXA or FLEXA) applies for each access unit (SIBT, MIBT, SBTGW (27) or MBTGW (27)), and who (what corporate MS(s)) can register through every access unit and make use of PBX's services through it; can be performed, as an implementation option, either: in every access unit (SIBT, MIBT, SBTGW (27) or MBTGW (27)), by means of configuration parameters and a local or remote configuration interface (case-1); or, in a centralised manner, in the PBX control software (case-2).

To this extent, there will be two different data-base types: one data-base type storing the BD_ADDRs of all authorised corporate MSs (DB-BD_ADDR-A), and another data-base type storing the BD_ADDR(s) allowed per each access unit (DB-BD_ADDR-B):
- For kind of accesses FIXA, and in case-1, a data-base DB-BD_ADDR-B shall be realised in every access units of kind FIXA storing its particular data (allowed BD_ADDR(s) in this access unit).
   In this same circumstance (FIXA and case-1), data-base DB-BD_ADDR-A is not needed in the access unit (it will exist elsewhere if FIXA and FLEXA accesses types coexist in the same PBX).
- For kind of accesses FIXA, and in case-2, DB-BD_ADDR-B shall be realised in an unique data-base accessible to the PBX's control software storing the particular data of every access unit (allowed BD_ADDR(s) in every access unit).
   In this same circumstance (FIXA and case-2), data-base DB-BD_ADDR-A is not needed, although it shall be realised elsewhere if FIXA and FLEXA accesses types coexist in the same PBX.
- For kind of accesses FLEXA, DB-BD_ADDR-B is not needed regardless the case (case-1 or case-2) in the access unit (it will exist elsewhere if FIXA and FLEXA accesses types coexist in the same PBX).
   This data-base DB-BD_ADDR-A can, as an implementation option: be realised in every access units of kind FIXA (case-1), or realised in an unique data-base accessible to the PBX's control software (case-2). In any case (case-1 or case-2), all instances of this DB-BD_ADDR-A will contain the same data.

Additionally, data-bases DB-BD_ADDR-A and/or DB-BD_ADDR-B can contain a one-to-one relationship between each BD_ADDRs entry in the data-base and its corresponding MSISDN number. Then, they can be used for number translation purposes both: when the corporate MS register in the PBX, and at call to/from the corporate MS when it is registered (present) in the PBX (*e.g.*: for calling number, called number, connected number, etc.).

Optionally, and if data-bases DB-BD_ADDR-A and/or DB-BD_ADDR-B does not contain MSISDN numbers; for each corporate MS that has successfully registered in the PBX through any kind of access unit, the PBX can handle an internal identifier (telephone number) that, for the extent of this aspect, will be its MSISDN number.

To accomplish this aspect an additional data-base will be needed (DB-BD_ADDR-C) that contain a one-to-one relationship between the BD_ADDRs of each authorised corporate MS and their corresponding MSISDN number. This DB-BD_ADDR-C shall be realised in an unique data-base accessible to the PBX's control software and, as an implementation option, can be the same data-base as DB-BD_ADDR-A (if it is already realised as unique and accessible to the PBX's control software) by pairing BD_ADDR/MSISDN data.

Such DB-BD_ADDR-C shall be used for number translation purposes (*e.g.*: for calling number, called number, connected number, etc.) at call to/from the corporate MS when it is registered (present) in the PBX.

In any case, FIXA or FLEXA, and for each corporate MS has successfully registered in the PBX through any kind of access unit, the PBX shall establish the association between the corresponding individual user profile(s) inside the PBX domain defined for each corporate MS's identification number (BD_ADDR or MSISDN number) and the access unit (SIBT, MIBT, SBTGW (27) or MBTGW (27)) where such user is physically located (registered/connected) for the forthcoming traffic (*e.g.*: calls) to/from such corporate MS.

Such kind of association already belongs to the present state-of-the-art where profile data related to each individual user (such as category for making/receiving calls, services availability, etc.) are associated both: to an extension identifier (such as a telephone number), and (statically or dynamically) to a physical interface where such user is connected to the PBX:
- In the case that the control/configuration of the access (FIXA or FLEXA) belongs to the PBX, then, for FIXA, such association is static, therefore the PBX has fixed association of the user profile to the corresponding access unit.
   In this same case, for FLEXA, then such association is dynamic, therefore, the PBX will establish it once the corporate MS has successfully registered.
- In the case that the control/configuration of the access (FIXA or FLEXA) belongs to the access unit (SIBT, MIBT, SBTGW (27) or MBTGW (27)), then, such association will be performed dynamically in the PBX once the corporate MS has successfully registered.

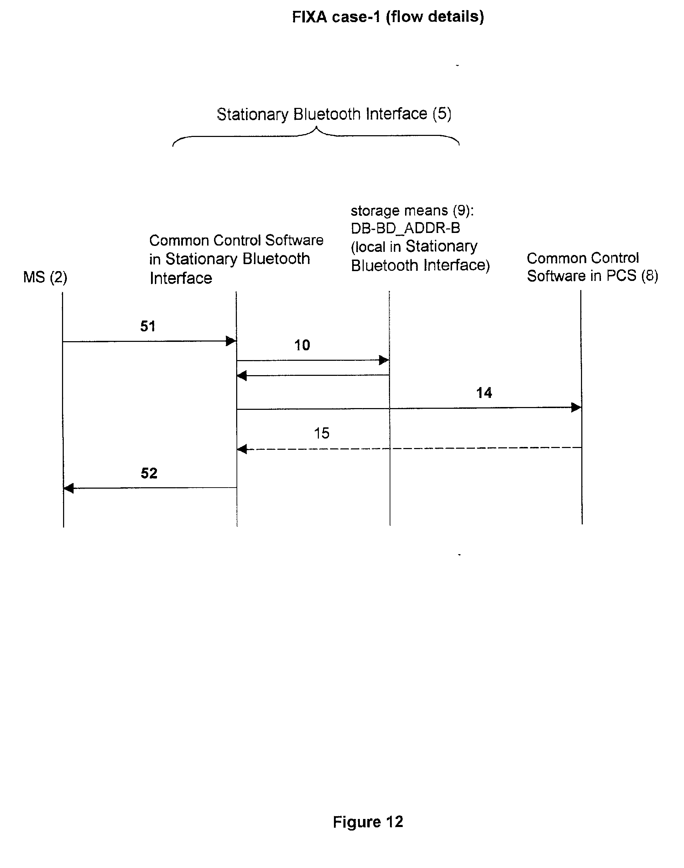

Thus, in **figure 12** the following elements can be seen: 14 and 15:
■ If IBT: Communication via internal communication means between IBT and the Common Control Software in the PCS.
■ If BTGW: Communication via the used existing protocol ("X" protocol) and then, via internal communication means between interface specific functions for this protocol ("X" protocol) in the PCS and the Common Control Software in the PCS.

51: Link establishment request (register request) (the BD_ADDR of the MS is known in the access unit).
10: Check data-base DB-BD_ADDR-B and result.
14: Notify register including BD_ADDR and/or MSISDN number.
15: Register result (accepted / rejected) (optional).
52: Connection (register) result (accepted / rejected).

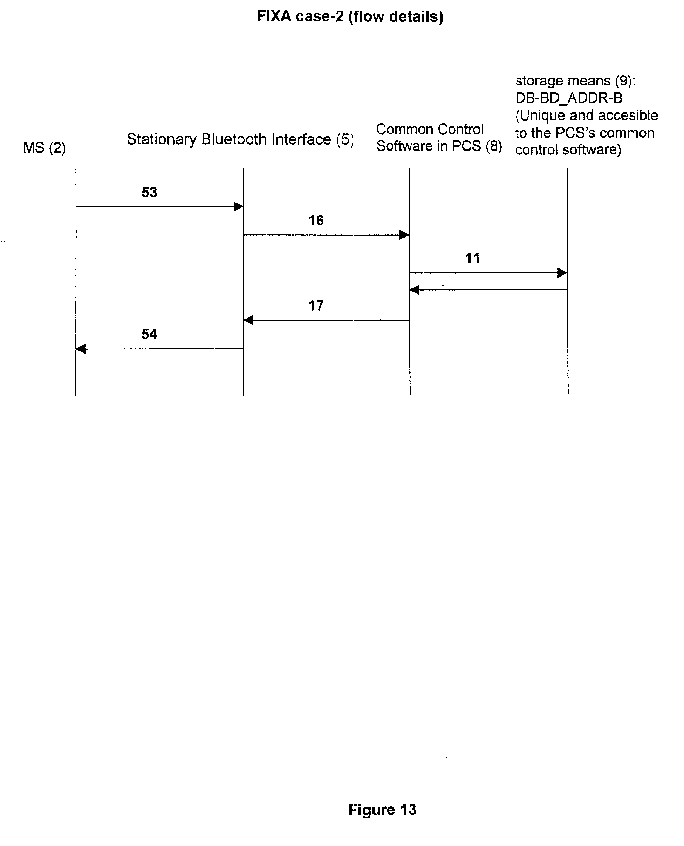

In **figure 13** the following elements can be seen: 16 and 17:
■ If IBT: Communication via internal communication means between IBT and the Common Control Software in the PCS.
■ If BTGW: Communication via the used existing protocol ("X" protocol) and then, via internal communication means between interface specific functions for this protocol ("X" protocol) in the PCS and the Common Control Software in the PCS.

53: Link establishment request (register request)(the BD_ADDR of the MS is known in the access unit).
16: Request register including BD_ADDR and/or MSISDN number.
11: Check data-base DB-BD_ADDR-B and result.
17: Register result (accepted / rejected).
54: Connection (register) result (accepted / rejected)

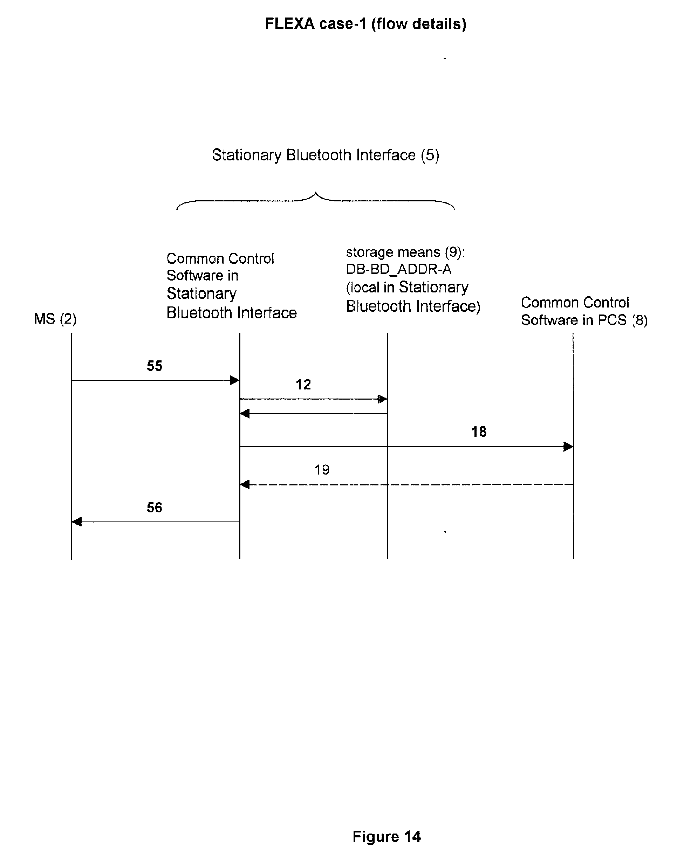

In **figure 14** the following elements can be seen: 18 and 19:
■ If IBT: Communication via internal communication means between IBT and the Common Control Software in the PCS.
■ If BTGW: Communication via the used existing protocol ("X" protocol) and then, via internal communication means between interface specific functions for this protocol ("X" protocol) in the PCS and the Common Control Software in the PCS.

55: Link establishment request (register request) (the BD_ADDR of the MS is known in the access unit).
12: Check data-base DB-BD_ADDR-A and result.
18: Notify register including BD_ADDR and/or MSISDN number.
19: Register result (accepted / rejected) (optional).
56: Connection (register) result (accepted / rejected)

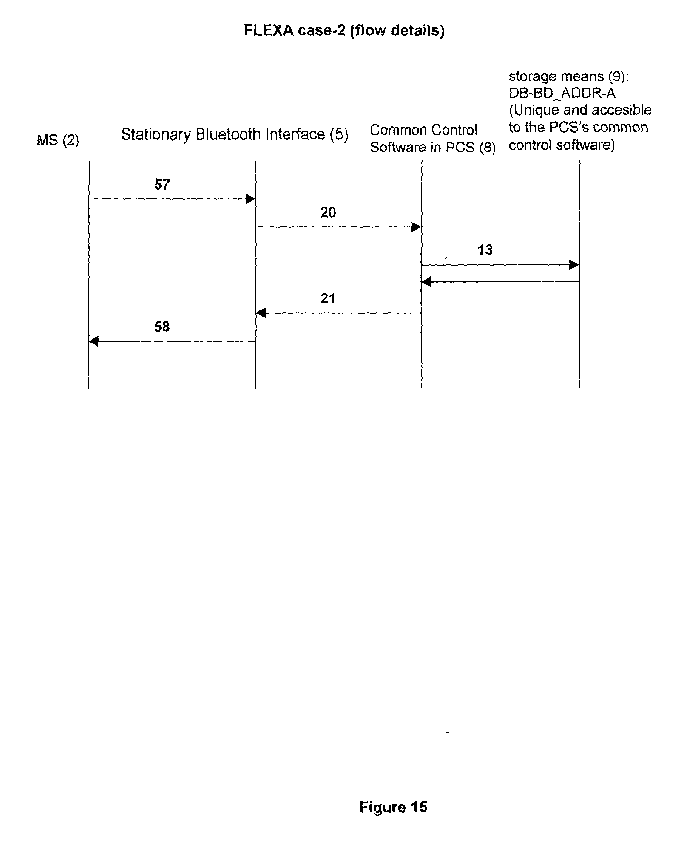

In **figure 15** the following elements can be seen: 20 and 21:
■ If IBT: Communication via internal communication means between IBT and the Common Control Software in the PCS.
■ If BTGW: Communication via the used existing protocol ("X" protocol) and then, via internal communication means between interface specific functions for this protocol ("X" protocol) in the PCS and the Common Control Software in the PCS.

57: Link establishment request (register request) (the BD_ADDR of the MS is known in the access unit).
20: Request register including BD_ADDR and/or MSISDN number.
13: Check data-base DB-BD_ADDR-A and result.
21: Register result (accepted / rejected).
58: Connection (register) result (accepted / rejected).

### Summarising, according to the main points of Aspect 3:

The apparatus for integrating mobile telephones as terminals of a PCS (Private Communication System) (1) is provided with:
- Bluetooth mode communication means for communicating with each present MS.
- Bluetooth mode communication means which activate a Bluetooth mode communication in replacement of said at least one PMN capability which has been inhibited in said PMN-inhibited MS, thereby enabling the PMN-inhibited MS, to communicate with the PCS (1) by said Bluetooth mode communication means in a PCS-operated mode as an integrated MS being integrated into the PCS (1) as a PCS extension enabled to communicate through the PCS (1).
- Bluetooth mode communication means which activate a Bluetooth mode communication enabling said integrated MS to place calls through the PCS (1) when said MS call placing capabilities have been inhibited.
- Bluetooth mode communication means which activate a Bluetooth mode communication enabling the integrated MS to receive calls through the PCS (1) when said MS call receiving capabilities have been inhibited.
- Enrouting means (22) for enrouting at least one of: calls addressed to and calls made from a present MS.
   - at least one stationary Bluetooth interface (5) which comprises access control means for determining if a particular MS (2) has access or not to the PCS (1) through said stationary Bluetooth interface (5).
   - at least one stationary Bluetooth interface (5) and the PCS (1) comprising access control means for determining if a particular MS (2) has access or not to the PCS (1) through a unique predefined stationary Bluetooth interface (31), through a set of predefined stationary Bluetooth interfaces (31) or through any available stationary Bluetooth interface (32).
   - at least one stationary Bluetooth interface (5), a PCS (1) and access control means for determining if a particular MS (2) has access or not to the PCS (1) through a unique predefined stationary Bluetooth interface (31), through a set of predefined stationary Bluetooth interfaces (31) or through any available stationary Bluetooth interface (32), said control means being located in either a stationary Bluetooth interface (5), the PCS (1) or a combination thereof.
   - Storage means (9) for storing identification data of each admissible MS. Said storage means (9) comprise identification assigning means for assigning at least a first telephone extension number belonging to the PCS (1) to each admissible MS.
      - The storage means (9) have the capacity for each admissible MS of establishing an association between: an identifier of said admissible MS corresponding to its BD_ADDR (Bluetooth Device Address); and at least a second attribute corresponding to its MSISDN (mobile phone number).
      - The storage means (9) have also the capacity of at least establishing further associations between each admissible MS and other attributes concerning to said MS selected from at least one of the following attributes: internal user profile, user name identification, category barring, secondary telephone extensions, user location based on the stationary Bluetooth interface (5) used by the MS (2), and usable information for the operation of the-PCS (1).
      - Verifying means (10, 11, 12, 13) for verifying in said storage means (9) if a MS (2) switched into Bluetooth mode within said radio coverage area is an admissible MS.
      - Registration means (14, 15, 16, 17, 18, 19, 20, 21) for registering each admissible MS verified by said verifying means (10, 11, 12, 13) as a present MS.

### ASPECT [4]:

According this aspect, the PBX is provided with different methods and means to identify the state of the connection (*i.e.*: present or absent) of each corporate MSs. This aspect is primarily intended to get the PBX aware of if a given call to a corporate MS can be placed in the corresponding extension line interface or, if instead, such call should be treated in other way; *e.g*.: forwarded to other destination, since such MS (2) is not available (*e.g.*: the MS (2) is outside the coverage area of the access unit).

That is to say, with the help of this aspect, the present state-of-the-art techniques that applies in today's PBX to deal with incoming calls to not-available telephone extensions (*e.g*.: extensions that are switched-off or disconnected), can also be available for corporate MS.

The methods described for this aspect will apply both: when the MS (2) register its presence in the PBX extension realm (via any kind of access unit), and later, for every registered corporate MS, in order to know its availability state (*i.e.*: if it is still in the coverage area of an access unit).

A first method, referred in this invention as soft-method, is mainly intended to be applied to integrated access units (IBTs: SIBT and MIBT), and for gateway access units (BTGWs (27): SBTGW or MBTGW) that handle a message-oriented protocol towards the PBX as extension line interface.

This first method is accomplished by indicating from the access unit (SIBT, MIBT, SBTGW (27) or MBTGW (27)) the presence/absence (*i*.*e*.: MS (2) registering, MS (2) registered, or MS (2) not registered/out of coverage) of the corporate MS by means of control messages sent through the signalling interface between the access unit and the PBX. Said first method can be based on similar flows as described in previous aspect 3 wherein the MS registers its presence in the PBX.

According to this aspect and previous aspect 3, one of the methods by means of which the PBX identifies the state of the connection (*i.e.* present or absent) of each coroporate MS is illustrated in figures 12, 13, 14 and 15.
- In the case of the integrated access unit (IBT: SIBT or MIBT), this is attained by internal indication (through internal communication means) from the IBT to the control software of the PBX, including (when needed) the relevant data identifying the particular corporate MS. Also, the PBX can periodically request to the SIBT or MIBT such status for the registered corporate MS indicating (when needed) the relevant data identifying the particular corporate MS.
- In the case of gateway access unit (BTGW (27): SBTGW or MBTGW), this can be attained by indication from the BTGW (27) *(e.g.:* at MS (2) registration, and periodically while the MS (2) is in idle state) of a message specific of the protocol used between the BTGW (27) and the PBX including (when needed) the relevant data identifying the particular corporate MS. Also, the PBX can emit periodically such kind of message for each already registered corporate MS indicating (when needed) the relevant data for identifying the particular corporate MS, in order to check its connection state.
   For cases where the protocol used between the gateway and the PBX already regards such kind_of information in standard messages, then such standard messages can be used (*e.g.*: RRQ/RCF or LRQ/LCF sequences of messages in case H.323 protocol is used). Otherwise, for cases where the protocol used between the gateway and the PBX does not regards such kind of information (or it is not desired to use standard messages cited above), then a message available in such protocol that can convey upper-layer information (*e*.*g*.: user-information data) not intended to be interpreted by such protocol, but by its user instead, can be used to convey transparently this information (*e.g.*: a User-Information message in case ISDN/Q.931 protocol, or other kind of message that allows tunnelling of information through the used protocol).

According to this aspect and previous aspect 3, the different ways in which an MS (2) registers its presence in the PCS are illustrated in figures 12, 13, 14 and 15.

A second method, referred in this invention as hard-method, is mainly intended to be applied to gateway access units (BTGWs (27): SBTGW or MBTGW) that does not handle a message-oriented protocol towards the PBX as extension line interface (*e.g.*: POTS interface); although it can also apply to gateway access units that handle a message-oriented protocol towards the PBX.

This second method is accomplished by the connection/disconnection from the BTGW (27) of one or more of its communication layers (33) (OSI model layers) towards the PBX, depending of the presence/absence of the corporate MS in the BTGW (27) neighbourhood.

For POTS interfaces, where only the physical layer (OSI layer-1) is defined, the simple connection/disconnection of such layer-1, upon corporate MS's presence/absence situations, it is enough for the PBX to know if a given corporate MS is available or not. For instance, in the case that a SBTGW (27) is connected to the PBX with a POTS interface (*i*.*e*. analogue extension line that handle only one user terminal), the gateway can notify the PBX that the MS (2) is not connected (MS not registered, or connection lost) by opening the loop (high-ohmic state, e.g. line resistance to the PBX > 20 kOhm) and, on the other hand, when detecting a MS (2) (MS registering, or connection re-established), by putting the line in idle state (7-20 kOhm). In case of MBTGW (27), the disconnection of the layer-1 would mean that no users are connected to it; and its connection would be re-established when, at least, one user register on it.

A similar method, can be applied by breaking/re-establishing the data link layer (OSI layer-2) for those extension line signalling protocols, which are message-oriented, but that do not support registration procedures, as ISDN or proprietary digital telephone sets extension lines. In this case, layer-1 keeps connected, but upper layers (3 to 7) keeps isolated from its peer entity in the other side of the interface.

For instance, if the protocol used between the BTGW (27) and the PBX is ISDN (*e.g.*: an S0 interface), then, while no corporate MS is registered, the BTGW (27) maintains its layer-2 link with the PBX disconnected. Later, when a MS (2) tries to register through the BTGW (27), the BTGW (27) re-establish the layer-2 link again, so network-layer (layer-3) messages can be exchanged with the PBX to notify the registration and for further traffic (calls) to/from this MS (2). Later, if the BTGW (27) lost the contact with the MS (2) (*e.g.*: out of coverage), then it disconnect the layer-2 again.

The method can be extended to any other upper communication layer (33) (OSI layers 3 to 7) by, for instance, neglecting any function or message pertaining to such layer, and re-establishing the "normal" operation upon absence/presence user(s) situations.

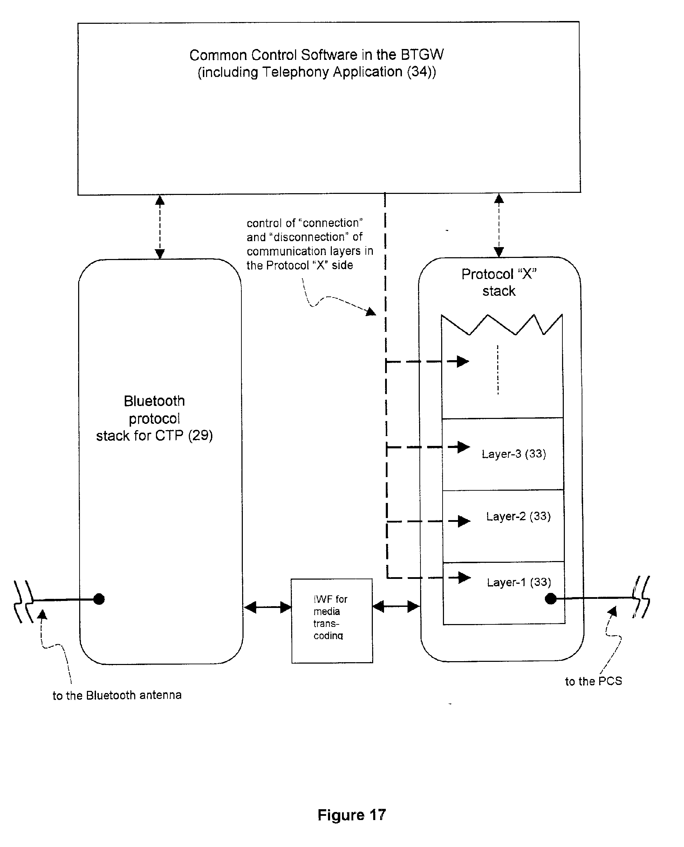

**Figure 17** is a functional block representation this method.

### Summarising, according to the main points of Aspect 4:

The apparatus for integrating mobile telephones as terminals of a PCS (Private Communication System) (1) where the stationary Bluetooth interface (5) is provided with specific functions to indicate to the PCS (1) the availability status of each admissible MS, said availability status selected from at least one of: switched off, out of coverage or present; by means of at least one of the following ways of operation:
- connecting or disconnecting from the stationary Bluetooth interface (5) at least one of its communication layers (33), belonging to the so called OSI model layers (33), towards the PCS (1), depending on the presence or absence of each admissible MS, respectively.
- by means of control messages sent in a specific protocol used between the stationary Bluetooth interface (5) and the PCS (1); those functions being activated either by the stationary Bluetooth interface (5) or at request of the PCS (1).
- by means of internal control messages between the stationary Bluetooth interface (5) and the control software (8) of the PCS (1); those functions being activated either by the stationary Bluetooth interface (5) or at request of the PCS (1).

### ASPECT [5]

According to this aspect, the PBX is provided with methods and means to handle the corporate MS's identification (i.e.: its telephone number) when it is registered in the PBX without any kind of additional number translation.

This aspect is primarily intended to make possible for other party to address (to call) and to identify (*e.g*.: as calling or connected party) the corporate MS by means of a number which belongs to the PBX's number series for its extension realm, and which is not the MSISDN number used normally to address a MS (2) from any public network (PSTN, ISDN, GSM, etc.)

The term "other party" means a telephone extension, which belongs to the PBX (including also a corporate MS), or which belongs to another PBX or network (VPN, PSTN, ISDN, GSM, etc.).

With the help of this aspect, at calls to/from corporate MS, there will not be need of additional number translation to/from the corresponding mobile phone number of the corporate MS (*e.g.*: MSISDN) and the corresponding internal telephone number for such MS (2) when registered in the PBX.

Also, with the help of this aspect, any existing method in the present state-of-the-art to associate a given telephone number with a given name (or any other text identifier), will automatically be available for the corporate MS.

Also, considering that telephone extensions in today's PBXs can be reached from other network (connected directly or indirectly to the PBX) by means of a prefix number (that address the whole PBX's extension domain), and considering that, normally, today's PBXs use to have some (or all) of its extension number series defined into the direct-in-dial (DID) number series of the connected exchange/s; then, with the help of this method, corporate MSs will be able to be addressed (called) from any other network connected (directly or indirectly) to the PBX with other telephone number which is not its MSISDN number, and which belongs to PBX's number series for extensions.

To accomplish this aspect, a method is defined that assigns to every corporate MS an individual extension number belonging to the PBX's internal number series, which is not the MSISDN number used normally to address a MS (2) from any public network (PSTN, ISDN, GSM, etc.).

(It must be noticed that the extension number can include, not only its internal representation in the PBX realm - Normally a short number with, for instance, 4 or 5 digits-, but also the corresponding network prefixes to reach the PBX's extension realm from any other network).

Such assignation can be done for some or all authorised corporate MSs (the ones allowed to register and make use of the PBX via any kind of access unit), regardless the kind of access unit (SIBT, MIBT, SBTGW (27) or MBTGW (27)), and regardless the used access method (FIXA or FLEXA); Such assignation will performed based on a relationship between either: the BD_ADDR and the assigned extension number, or the MSISDN number (got from BD_ADDR as explained in Aspect-3) and the assigned extension number.

This method can be implemented with different solutions (that can coexist even simultaneously), and that can be selected as implementation options:
- The telephony application in the corporate MS contains such extension number. Among other data, it transmits such extension number when it registers in to the PBX via any kind of access unit, and continues using it later in its interface with the access unit. Then the access unit uses such extension number in its interface with the PBX.
- The access unit contains the relationship between the BD_ADDR (or the MSISDN number got from the BD_ADDR) and the extension number. It uses the BD_ADDR (received, among other data, from the MS (2) when it register) on its interface with the MS (2), and then, the access unit uses such extension number in its interface with the PBX.
   Optionally, the access unit can send the extension number to the corporate MS when it has successfully registered. Such extension number can be used in the corporate MS for local information purposes, and also for further communication with the access unit.
- The PBX contains the relationship between the BD_ADDR (or the MSISDN number got from the BD_ADDR or received from the access unit) and the corresponding extension number. It uses the BD_ADDR on its interface towards the access unit, and the extension number for internal purposes.
   This feature can be achieved with the help of the previously cited (Aspect-3) DB-BD_ADDR-C, where the values of MSISDN numbers are replaced by the corresponding extension numbers.
   Optionally, the PBX can send the extension number to the corporate MS via the access unit when it has successfully registered (for BTGW (27) this is only feasible if the protocol between the PBX and the BTGW (27) allows any method to convey such information). Such extension number can be used in the corporate MS for local information purposes, and also for further communication with the access unit.
- The PBX has a fixed assignment, for some or all access units, of one extension number per access unit. This solution can be suitable, for instance, for access units of the type BTGW (27) that handle a protocol that does not regards registration procedures (*e.g*.: POTS for analogue telephone lines), and also for accesses of type FIXA.
   Optionally, the PBX can send the extension number to the corporate MS via the access unit when it has successfully registered (for BTGW (27) this is only feasible if the protocol between the PBX and the BTGW (27) allows any method to convey such information). Such extension number can be used in the corporate MS for local information purposes, and also for further communication with the access unit.
- The association between the directory number of a user and the access unit where that user is physically located can also be made manually by the user, e.g. by means of dialling a keypad procedure. In this keypad procedure the user shall indicate its directory number and, optionally, some kind of PIN to authenticate it; so, after analysing the keypad procedure, the PBX software can establish the relation between that access unit and the user's directory number. This solution can be suitable, for instance, when there is need to provide flexible access (FLEXA) with access units of the type BTGW (27) that handle a protocol that does not regards registration procedures (*e.g.*: POTS for analogue telephone lines).

### Summarising, according to the main points of Aspect 5:

The apparatus for integrating mobile telephones as terminals of a PCS (Private Communication System) (1) is provided with storage means (9) having the capacity for each admissible MS of establishing an association between: an identifier of said admissible MS; and at least a first attribute corresponding to a first telephone extension number belonging to the PCS's extension realm. Said storage means (9) store the BD_ADDR (Bluetooth Device Address) of each admissible MS as an identifier of said admissible MS.

The storage means (9) have the capacity for each admissible MS of establishing an association between: an identifier of said admissible MS corresponding to its BD_ADDR (Bluetooth Device Address); and at least a second attribute corresponding to its MSISDN (mobile phone number).

The storage means (9) have also the capacity of at least establishing further associations between each admissible MS and other attributes concerning to said MS selected from at least one of the following attributes: internal user profile, user name identification, category barring, secondary telephone extensions, user location based on the stationary Bluetooth interface (5) used by the MS (2), and usable information for the operation of the PCS (1).

The association between an admissible MS and at least one of its attributes may be established in different moments, selected from at least:
association accomplished when the admissible MS becomes a present MS;
association previously established and remains fixed until a new parameterisation is done;

The association between an admissible MS and at least one of its attributes may be stored in different locations, selected from at least: within the MS (2), within the stationary Bluetooth interface (5) and within the PCS (1).

### ASPECT [6] :

According to this aspect, the PBX is provided with methods and means to handle incoming calls towards the corporate MSs.

This aspect is primarily intended to do not lose incoming calls to a corporate MS received in the PBX from another internal party (including also a corporate MS) or from another external party belonging to any other network connected (directly or indirectly) to the PBX (another PBX, VPN, PSTN, ISDN, GSM, etc).

This method is accomplished by establishing, for every corporate MS, a relationship in the PBX's control software between the extension number cited in the previous aspect [5], and the corresponding MSISDN number for this corporate MS.

So, when a corporate MS is called through the PBX, and either: it does not answer, or, with the help of a previous aspect [4] described in this invention, the PBX is aware that such MS (2) it is not reachable (*e.g.*: switched off or out of coverage); the PBX can forward the incoming call either: to the MSISDN number of such corporate MS (thus the MS (2) will receive the call through the public mobile network; *e.g.*: GSM), or it can forward the call to another answering position, internal to the PBX (*e.g.*: secretary, voice mail system), or external to the PBX.

### Summarising, according to the main points of Aspect 6:

The apparatus for integrating mobile telephones as terminals of a PCS (Private Communication System) (1) is provided with integrating means that further comprises first call-forward executing means in the PCS (1) ordering the PCS (1) that communications addressed to the aforementioned first telephone extension number, be forwarded from the PCS (1) either:
to another telephone extension number belonging to the PCS's extension realm via internal communication means in said PCS (1), or to another public or private network.

When a phone call addressed to the aforementioned first telephone extension number assigned to a MS (2) is either:
not answered by said MS (2) or not possible to be placed through Bluetooth mode communication means towards said MS (2);
the first call-forward executing means in the PCS (1) further orders to forward said phone call from the PCS (1), either: to another extension number belonging to the PCS's extension realm, via internal communication means in said PCS (1); or to another party external to the PCS (1), including the MSISDN number of the MS (2) itself, via any existing external communication means in said PCS (1) with another public or private network.

### ASPECT [7]:

According to this aspect, the corporate MS and/or the PBX are provided with different methods to perform a bearer selection for handling outgoing calls made from the corporate MSs. With the help of such methods, an outgoing call made from a corporate MS registered in the PBX, can be routed either: via the corresponding access unit through the PBX, or through the public mobile network.

This aspect is mainly (but not exclusively) intended to select the least cost path for a call that, in most of the cases, will be to route the outgoing call via the access unit through the PBX.

This aspect will apply only when the corporate MS is inside the office environment; that is to say: when it is registered in the PBX via any kind of access unit. Thus, calls from the corporate MS when it is outside the office environment (that is: not registered in the PBX), will all be routed in the normal way through the public mobile network.

A first method to accomplish this aspect is to provide this bearer selection as an option in the corporate MS's user interface. Since such feature will probably be provided in all commercial mobile telephones provided with Bluetooth, then a corporate MS can use such built-in function to perform the bearer selection for outgoing calls among the PBX and the mobile network.

A second method to accomplish this aspect is to provide a bearer selection function on top of the GSM and Bluetooth protocol stacks in the corporate MS. That is to say, such function would belong to a telephony application in the corporate MS that lies in two legs: one of them interworking with the GSM protocol stack, and the other interworking with the Bluetooth protocol stack.

Such function would analyse the digits dialled for the user and, according to predefined criteria, would place the call through the PBX (via Bluetooth interface with the access unit), or place it through the public mobile network (via the standard GSM interface with the BTS).

The predefined criteria can be based on: a list of numbers, a list of number series (*e.g.*: all numbers starting with certain digits), a combination of both (list of numbers and number series), in the link status availability with the PBX and with the public mobile network (*e*.*g*.: all call routed through PBX if the contact with the public mobile network has been lost) and also in the time of the day of day of the week.

Also, such function includes manipulation (re-arrangements) of the digits dialled by the user in order to adapt such dialled digits to the network (PBX or GSM) that will primarily serve such call. For instance, if a corporate MS user dials another MS user's MSISDN number, then this function can add to such number the PBX's defined prefix for external calls *(e.g.:* 00) if a call to such number (or number type) is intended (predefined) to be routed through the PBX.

A third method to accomplish this aspect is achieved by a co-ordinated interworking between the corporate MS and the PBX control software. In this case also, the function in the MS (2) would belong to the previously cited telephony application in the corporate MS that controls both legs of the two communication protocol stacks (GSM and Bluetooth). With this method, the digits dialled by the user in the MS (2) shall be sent to the PBX, via the corresponding access unit (the one where the corporate MS is presently linked), to be checked there. Then a specific function in the PBX control software shall return to the corporate MS, via the corresponding access unit, the result indicating what interface to use for such outgoing call: if the standard GSM interface, or the Bluetooth interface towards the PBX via the access unit, as well as digit re-arrangements when needed.

In this method, the realisation of the communication protocol between the access unit (IBT or BTGW (27)) and the PBX will depend on the signalling interface between the access unit and the PBX.
- In the case of the integrated access unit (IBT: SIBT or MIBT), this is attained by internal communication (through internal communication means) from the IBT to the control software of the PBX, by using internal SW messages.
- In the case of gateway access unit (BTGW (27): SBTGW or MBTGW), this can be attained by means of a messages specific of the protocol used between the BTGW (27) and the PBX.
   For cases where the protocol used between the gateway and the PBX already regards such kind of information in standard messages, then such standard messages can be used (*e.g.*: an ARQ/ACF sequence of messages in case H.323 protocol is used). Otherwise, for cases where the protocol used between the gateway and the PBX does not regards such kind of information (or it is not desired to use standard messages cited above), then a message available in such protocol that can convey upper-layer information (*e.g.*: user data) not intended to be interpreted by such protocol, but by its user instead, can be used to convey transparently this information (*e.g.*: a User-Information message in case ISDN/Q.931 protocol, or other kind of message that allows tunnelling of information through the used protocol).
- In the case of access units (IBT or BTGW (27)) that are connected to the PBX through a data network (*e*.*g*. a intranet), the method to send the dialled digits from the MS (2) to the PBX and the order from the PBX to the MS (2) indicating what interface to use for such outgoing call and the digits to dial, can be based on a WAP (44) or HTTP connection between the PBX and the MS (2). In this case WAP (44) or HTTP is transported over the Bluetooth link from the MS (2) to the access unit, and over the data network from the access unit to the PBX.

Already existing least cost routing functions in today's PBX can continue working without any conflict with any of the three methods described above.

### Summarising, according to the main points of Aspect 7:

The apparatus for integrating mobile telephones as terminals of a PCS (Private Communication System) (1) is provided with inhibiting means for converting a present MS into a PMN-function-inhibited MS, by at least partially and at least temporarily inhibiting at least one PMN capability in a present MS (said PMN capability is selected from MS (2) call placing capabilities for establishing outgoing communications directly to the PMN (3a) in order to convert the present MS into a PMN-calling-inhibited MS, and MS (2) call receiving capabilities for receiving incoming communications directly from the PMN (3a) in order to convert the present MS into a PMN-receiving-inhibited MS.

At least one admissible MS, is provided with bearer selection means located in a TA (Telephony Application) (34) of said MS, in order to select which network to use for making an outgoing call: if the PMN (3a) or the PCS (1); where said bearer selection means perform a control selection for outgoing calls between the two available interfaces: the standard interface (3) with the PMN (3a), and the Bluetooth interface (4) with the PCS (1), said selection based either: in a user indication, or in an analysis of the digits dialled by the user according to a list of numbers previously stored in the MS (2) containing the criteria of selection per stored number or series of numbers.

At least one admissible MS, is provided with a TA (Telephony Application) software (34) enhanced with bearer selection means to perform a re-arrangement (35) of the digits dialled by the user depending on the bearer selected: PMN (36) or PCS (37).

The PCS (1) comprises bearer selection means to select which network to use for making an outgoing call: either the PMN (3a) or the PCS (1); said selection being accomplished by means of a co-ordinated operation via the stationary Bluetooth interface (5), between: the TA (Telephony Application) (34) of the MS (2) and the bearer selection means of the PCS (1); where the TA (34) first sends the dialled digits to the PCS (1) and then, the PCS (1) returns to the TA (34) either: an indication containing the network to be use, a re-arrangement of the dialled digits to make the call, which implicitly contains information about which network to use, or a combination thereof.

### ASPECT [8] :

According to this aspect, and in order to fully integrate the corporate MSs as terminals of the PBX, methods and means are provided so that the corporate MS gain fully access to, at least, the same services/features nowadays available for the already existing telephone extensions belonging to a PBX.

With the help of this aspect, services provided today by a PBX for the telephone extensions belonging to its extension realm, such as activation/deactivation of call forwarding, intrusion, multiconference (call with more than 3 parties simultaneously), call pick-up, transfer, etc., could be invoked also from any corporate MS, regardless the type of access unit used to connect with the PBX, and be served from the PBX as it does for the other existing types of telephone extensions.

Since every service invocation from the corporate MS to the PBX, and the subsequent confirmation from the PBX to the corporate MS, pass through the access unit; to accomplish this aspect, both interfaces: the interface between the corporate MS and the access unit (whatever type: IBT or BTGW (27)), and the interface between the access unit and the PBX, shall be considered.

Regarding the interface between the corporate MS and the access unit (IBT or BTGW (27)), the invocation from the corporate MS of a given service, as well as the subsequent confirmation of successful/unsuccessful activation or deactivation of service, can be carried out by different methods.

Such methods are referred in this invention as Keypad Method and Graphical User Interface Method, and both can be implemented for any type of access unit: IBT or BTGW (27):
- The Keypad Method consists in the mere transmission of the digit(s) related to the specific procedure. This method is the most suitable (but not limited to) to be used for BTGW (27) that have a POTS interface towards the PBX.
   *E*.*g*. : a call from the MS (2) where dialled digits were "*21*1327#, could imply a call forwarding unconditional for the corporate MS that makes such call to extension with number 1327; etc.
   This keypad method can also be invoked when the corporate MS has already an established call by means of Dual Tone Multifrequency (DTMF) digits. In this case, the access unit will analyse the dialled DTMF digit and, depending on the digit itself and on the traffic case of the present call, will either: transfer the DTMF information to the connected party, or invoke a given service. *E*.*g*.: dialling digit "2" for an already established call, could imply to park such call and have the possibility to make a new one; then, later dialling digit "3" the present call would be mixed in the PBX with the previous parked call into a three-party conference; etc..
   Such transparent transmission of digits from the corporate MS to the access unit can lean in the telephony application defined in the Cordless Telephony Profile protocol profile already defined by Bluetooth protocol stack with the help of the DTMF service defined in the TCS-Binary protocol. In this way, no modification would be needed in such telephony application nor in the TCS-Binary protocol to achieve the purpose of this aspect.
   Confirmation of successful/unsuccessful activation or deactivation of service, can be provided back, from the access unit to the corporate MS, via confirmation audible tone, by means of text messages, by means of Bluetooth's specific progress messages, or by any other method already available for any telephony application defined in the Cordless Telephony Profile protocol profile of Bluetooth protocol stack.
- With the Graphical User Interface Method, the set of all available services accessible to be invoked in a given state (*e.g.*: while in idle state, while in call to other party, while in call to busy party, etc.), as well as the confirmation of successful/unsuccessful activation or deactivation of service, can be shown in the corporate MS's display. To accomplish this method the corporate MS shall be provided with a standard browser protocol (such as WAP (44) or HTTP).
   Therefore, the corresponding information related to available services shall be dynamically (depending on the present MS's state) posted from the PBX, via access unit of type IBT, by sending WML or HTML pages; or posted from the access unit of type BTGW (27) upon either:
   - internal information related to services available per possible communication state stored in the BTGW (27), or
   - information received dynamically from the PBX.

   Then, when the user selects a given service, the telephony application in the corporate MS shall post this information via the used protocol (WAP (44) or HTTP) into the PBX via the access unit.
   This kind of method should not imply any modification in a commercial MS (2) provided with Bluetooth interface, if they are provided also with a standard WAP (44) or HTTP browser able to any of the radio interfaces: Bluetooth (at least) and GSM.

Regarding the interface between the access unit (IBT or BTGW (27)) and the PBX, the invocation from the corporate MS of a given service, as well as the subsequent confirmation of successful/unsuccessful activation or deactivation of service, can be carried out by different methods. These methods will basically depend on the type of access unit used (IBT or BTGW (27)).
- In the case the access unit is IBT (SIBT or MIBT), then both: the service request from the IBT to the PBX, and the subsequent confirmation of successful/unsuccessful activation or deactivation of service from the PBX to the IBT, can be signalled by internal indications between the IBT and the PBX through internal communication means.
   The function in the IBT will vary depending on the method used to request/confirm the services in its interface towards the corporate MS. That is to say: If Keypad Method is used, then, upon reception of keypad digits from the corporate MS, two options can be implemented: the digits are transmitted towards the PBX Common Control Software as received from the MS (2); or they are interpreted in the IBT, so an explicit service (45) indication is sent to the PBX Common Control Software. In the second case the IBT shall be previously instructed from the PBX Common Configuration Functions, or programmed internally, about every correspondence between a keypad digit combination and the corresponding service (*e.g.*: "*21*extension n#" means "unconditional call forwarding" (48) to extension with number 'extension_nr').
   Then, upon reception of confirmation of successful/unsuccessful activation or deactivation of service from the PBX Common Control Software, the appropriate tone, text message, etc. (as cited before for this method), shall be sent to the corporate MS. If the Graphical User Interface Method is used, then, upon reception of the post message from the corporate MS, two options can be implemented: the posted message is transmitted towards the PBX Common Control Software transparently (40) as received from the MS (2); or it is interpreted in the IBT, so a explicit and specific service indication is sent to the PBX. In the second case the IBT shall be previously instructed from the PBX Common Configuration Functions, or programmed internally, about every correspondence between every content in the message and the corresponding service.
   Then, upon reception of confirmation of successful/unsuccessful activation or deactivation of service from the PBX Common Control Software, the appropriate WML or HTML page containing the service result shall be posted towards the corporate MS.
- In the case the access unit is BTGW (27) (SBTGW or MBTGW), then both: the service request from the BTGW (27) to the PBX, and the subsequent confirmation of successful / unsuccessful activation or deactivation of service from the PBX to the BTGW (27), shall be signalled by using the same procedures that applies today to request and confirm services in the specific signalling interface (standard or proprietary) used between the BTGW (27) and the PBX. That is to say: for a BTGW (27) that uses a given "protocol-X" to communicate with the PBX, the procedures shall be the same as the one used between any telephone extension that uses such "protocol-X". So, from the PBX point of view, it is providing services to an already existing type of telephone extension, according to an already existing method to request and confirm the services for such type of extension.
   If, for instance, such interface is an ISDN-S0 interface, then the service request and confirmation can run according to two standard protocols: Generic Functional Protocol or Keypad Protocol, since both protocols are defined as standard for requesting supplementary services (39) through ISDN-S0 interfaces.
   If, for instance, such interface is a POTS interface (analogue telephone interface) then the service request will consist in Dual Tone Multifrequency (DTMF) sent from the BTGW (27) towards the PBX, and the confirmations will be performed by means of audible tone sent from the PBX to the BTGW (27).
   The function in the BTGW (27) will vary depending on the method used to request/confirm the services in its interface towards the corporate MS, and needs to be programmed internally. That is to say:
   If Keypad Method is used, then, upon reception of keypad digits from the corporate MS, the BTGW (27) shall interpret the requested service and translate it to the appropriate format according to the protocol used in its interface towards the PBX. If such protocol is, for instance POTS, then the function in the BTGW (27) can be so simple as to transform these digits into DTMF signals or decadic pulses. For other more complex protocols, such as H.323 or ISDN-S0, then, once the keypad digits have been interpreted, the BTGW (27) shall perform the corresponding coding of the service, and then send the subsequent message requesting the service to the PBX.
   Afterwards, upon reception of confirmation of successful/unsuccessful activation or deactivation of service from the PBX, the appropriate tone, text message, etc. (as cited before for this method) shall be sent to the corporate MS.
   If the Graphical User Interface Method is used, then, upon reception of the post message from the corporate MS, the BTGW (27) shall interpret the requested service and translate it to the appropriate format according to the protocol used in its interface towards the PBX. That is to say, once the BTGW (27) has interpreted the requested service, it shall act as described above for the Keypad Method.
   Afterwards, upon reception of confirmation of successful/unsuccessful activation or deactivation of service from the PBX, the appropriate WML or HTML page containing the service result shall be posted towards the corporate MS.
   A particular case when a Graphical User Interface Method is used is to provide the end-point for the WAP (44) or HTTP communication in the PBX instead than in the BTGW (27). This is applicable if the underlying network (and underlying network protocol) that links the BTGW (27) with the PBX allows several network connections towards the same device (such as H.323 or SIP over IP network).
   So, in this case, the BTGW (27) acts just as a transparent bridge of information between the client application using WAP (44) or HTTP in the corporate MS, and the server application using WAP (44) or HTTP in the PBX. That is to say, there is not any end-point application using WAP (44) or HTTP in the BTGW (27), but the application in the BTGW (27) just act as a relay for the WAP (44) or HTTP messages received from the corporate MS via radio and the ones received from the PBX via, for instance, IP network.

### ASPECT [9]:

According to this aspect, and being supported also by previously described aspect [5], the corporate MS is provided with a function that, as soon as it successfully register (logs-on) in the PBX through an access unit, all calls that are made to this MS (2) using its MSISDN number (the "normal" way to call a MS (2)) are forwarded to the extension number cited in aspect [5], and thus will be received in the corporate MS from the PBX via the corresponding access unit.

To accomplish this aspect, the cited function in the MS (2) would belong to the previously cited telephony application in the corporate MS that controls both legs of the two communication protocol stacks (GSM and Bluetooth); and it could implement three different methods:
- The first method implies that the corporate MS user has previously programmed a "call forwarding on no reachable" (46) against the public mobile network, stating the PBX extension number (with the corresponding network prefixes to reach the PBX) as "forwarding-to number".
   With this method, when the corporate MS successfully register into the PBX (60, 61, 62, 63), the cited function will just disconnect (or inhibit) the GSM radio link (47) in the MS (2) that it has established with the public mobile network .
- The second method does not imply any previously programmed "call forwarding on no reachable" in the public mobile network. Instead such number is either: previously stored in the corporate MS, or got from the PBX or from the access unit in the registration procedure (as described in aspect [5]).
   With this method, when the corporate MS successfully register into the PBX (68, 69, 70, 71), the cited function will first request a "call forwarding on no reachable" against the public mobile network (72), stating the extension number (with the corresponding network prefixes to reach the PBX) as "forwarding-to number". Then, upon successful result of the forwarding request, it will disconnect the GSM radio link (73) that the MS (2) has established with the public mobile network.
- The third method does not imply to disconnect the GSM radio link. Instead, when the corporate MS successfully register into the PBX (76, 77, 78, 79), the cited function will first request an "unconditional call forwarding" (48) against the public mobile network, stating the extension number (with the corresponding network prefixes to reach the PBX) as "forwarding-to number". This extension number can be previously stored in the corporate MS, or got from the PBX or from the access unit in the registration procedure as described in aspect [5].

Then, regardless the method used, as for the public mobile network is as if the MS (2) was switched off or became out of coverage, the public mobile network will forward subsequent incoming calls to this MS (2) to the previously programmed forwarding number (that is the cited extension number). Therefore, subsequent incoming calls to this MS (2) that are made to its MSISDN number will be received in the PBX where the corporate MS is currently located.

Also regardless the method used, the cited function will perform the reverse procedure when the corporate MS lose its contact with the access unit (64, 74, 80). That is to say: after a predefined time interval without contact with the access unit, the cited function will, *e.g.*, turn on the GSM radio link (66, 49) for cases where said radio link was previously disconnected and/or send automatically a request to "cancel call forwarding" (67, 50, 82) to the public mobile network. So, subsequent calls to this MS (2) that are made to its MSISDN number will be directly received in the MS (2) via the public mobile network.

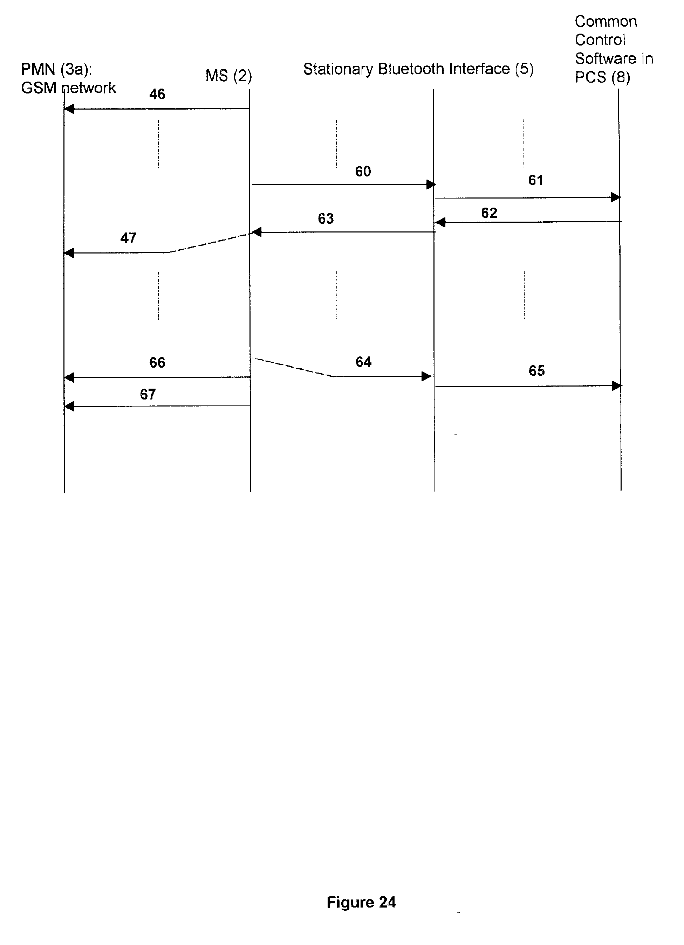

The details of the features disclosed in this aspect are illustrated in figures 24, 25 and 26.

Thus, in figure 24 the following elements can be seen:
46: MS has previously requested to the PMN network a "Call Forwarding On No Reachable" indicating, as "forwarding to" number, its extension number in the PCS realm (corresponding prefixes are added).
60, 61, 62 and 63: Corporate MS successfully registers into the PCS.
47: Then, upon successful register confirmation received via Bluetooth stack, Telephony Application in the corporate MS orders to PMN stack to inhibit radio-link to PMN or to detach from PMN network.
64 and 65:Corporate MS gets out of coverage from its Access Unit.
66: Then, upon disconnection indication received via Bluetooth stack, Telephony Application in the corporate MS orders to PMN stack to enable radio-link to PMN or to attach to PMN network.
67: Then, once the corporate MS is linked with the PMN network, Telephony Application in the corporate MS can, OPTIONALLY, order to PMN stack to cancel the previous call forwarding.

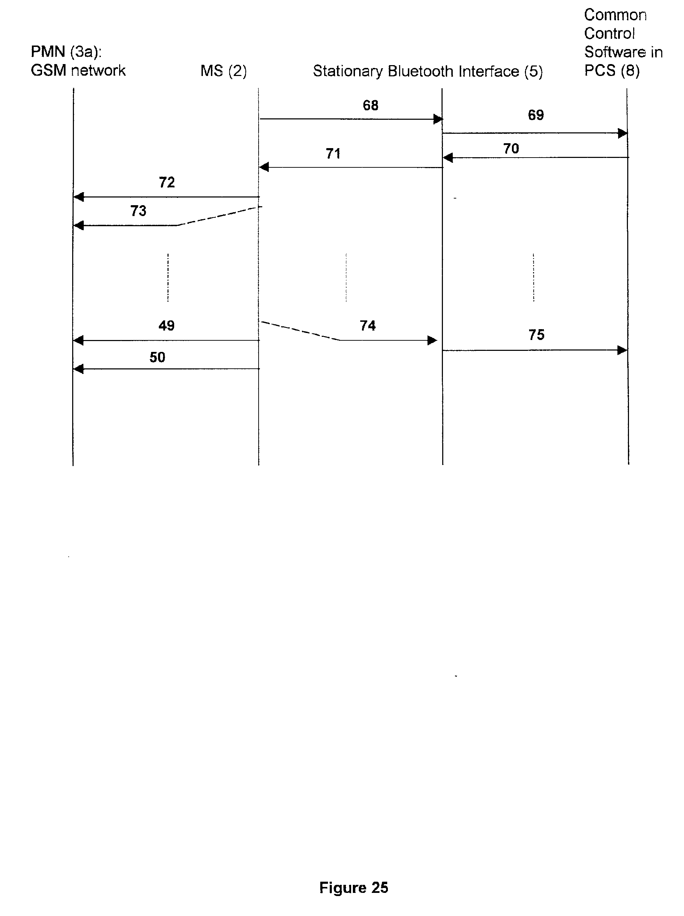

In **figure 25** the following elements can be seen:
68, 69, 70 and 71: MS successfully register into the PCS. 72: Then, upon successful register confirmation received via Bluetooth stack, Telephony Application in the corporate MS orders to PMN stack to request a "Call Forwarding On No Reachable" indicating, as "forwarding to" number, its extension number in the PCS realm (corresponding prefixes are added).
73: Then, upon successful call forwarding confirmation received via PMN stack, Telephony Application in the corporate MS orders to PMN stack to inhibit radio-link to PMN or to detach from PMN network.
74 and 75:Corporate MS gets out of coverage from its Access Unit.
49: Then, upon disconnection indication received via Bluetooth stack, Telephony Application in the corporate MS orders to PMN stack to enable radio-link to PMN or to attach to PMN network.
50: Then, once the corporate MS is linked with the PMN network, Telephony Application in the corporate MS can, OPTIONALLY, order to PMN stack to cancel the previous call forwarding.

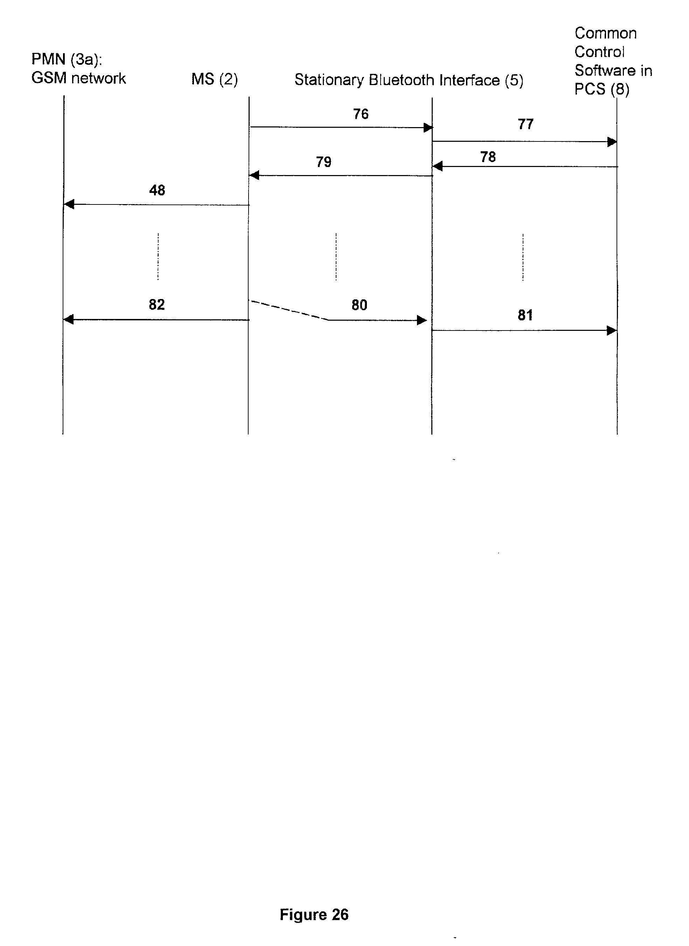

In **figure 26** the following elements can be seen:
76, 77, 78 and 79: MS successfully registers into the PCS.
48: Then, upon successful register confirmation received via Bluetooth stack, Telephony Application in the corporate MS orders to PMN stack to request a "Call Forwarding Unconditional" indicating, as "forwarding to" number, its extension number in the PCS realm (corresponding prefixes are added).
80 and 81:Corporate MS gets out of coverage from its Access Unit.
82: Then, upon disconnection indication received via Bluetooth stack, Telephony Application in the corporate MS orders to PMN stack to cancel the call forwarding.

## Claims

1. **An apparatus for integrating mobile telephones as terminals of a PCS** (Private Communication System) (1) provided with control means including extension realm control means, the apparatus comprising
integrating means for integrating at least one MS (Mobile Terminal) (2) into the PCS (1) as an admissible MS, said admissible MS being equipped with a first interface (3) for communicating with at least one PMN (public mobile network) (3a) and with a second interface being a Bluetooth interface (4), the integrating means comprising
a stationary Bluetooth interface (5) connected to Bluetooth radio transceiver means (6) having a limited radio coverage area for communicating with each admissible MS located within the radio coverage area, the stationary Bluetooth interface (5) comprising first transcoding means (7) for enabling communication between the PCS control means (8) and said Bluetooth radio transceiver means (6);
storage means (9) for storing identification data of each admissible MS;
verifying means (10, 11, 12, 13) for verifying in said storage means (9) if a MS (2) switched into Bluetooth mode within said radio coverage area is an admissible MS;
registration means (14, 15, 16, 17, 18, 19, 20, 21) for registering each admissible MS verified by said verifying means (10, 11, 12, 13) as a present MS; and
Bluetooth mode communication means for communicating with each present MS;
the storage means (9) comprising identification assigning means for assigning at least a first telephone extension number belonging to the PCS (1) to each admissible MS;
enrouting means (22) for enrouting at least one of: calls addressed to and calls made from a present MS.

2. **An apparatus according to claim 1** further comprising second transcoding means (23) for enabling media transfer between the PCS switching means (59) and said Bluetooth radio transceiver means (6).

3. **An apparatus according to claims 1 or 2** further comprising inhibiting means for converting a present MS into a PMN-function-inhibited MS, by at least partially and at least temporarily inhibiting at least one PMN capability in a present MS, said PMN capability being selected from MS (2) call placing capabilities for establishing outgoing communications directly to the PMN (3a) in order to convert the present MS into a PMN-calling-inhibited MS, and MS (2) call receiving capabilities for receiving incoming communications directly from the PMN (3a) in order to convert the present MS into a PMN-receiving-inhibited MS.

4. **An apparatus according to any of claim 3,** wherein the Bluetooth mode communication means activate a Bluetooth mode communication in replacement of said at least one PMN capability which has been inhibited in said PMN-inhibited MS, thereby enabling the PMN-inhibited MS, to communicate with the PCS (1) by said Bluetooth mode communication means in a PCS-operated mode as an integrated MS being integrated into the PCS (1) as a PCS extension enabled to communicate through the PCS (1).

5. **An apparatus according to claim 1,** wherein the integrating means further comprises first call-forward executing means in the PCS (1),
said first call-forward executing means, ordering the PCS (1) that communications addressed to the aforementioned first telephone extension number, be forwarded from the PCS (1) either:
to another telephone extension number belonging to the PCS's extension realm via internal communication means in said PCS (1), or
to another public or private network.

6. **An apparatus according to any of claims 3 to 5,** wherein said Bluetooth mode communication means activate a Bluetooth communication mode enabling said integrated MS to place calls through the PCS (1) when said MS call placing capabilities have been inhibited.

7. **An apparatus according to any of claims 3 to 5,** wherein said Bluetooth mode communication means activate a Bluetooth communication mode enabling the integrated MS to receive calls through the PCS (1) when said MS call receiving capabilities have been inhibited.

8. **An apparatus according to claim 1,** wherein the PCS (1) in which said apparatus is integrated in, is at least one of the types selected from wired implemented, wireless implemented and combinations thereof.

9. **An apparatus according to claim 1,** wherein the PCS (1) in which said apparatus is integrated in, is at least one of the types selected from packet oriented, circuit switching oriented, and combinations thereof.

10. **An apparatus according to claim 1,** wherein the PCS (1) in which said apparatus is integrated in, has at least one private communication node (24).

11. **An apparatus according to claim 1,** wherein the PCS (1) in which said apparatus is integrated in, comprises means for handling at least one of voice extensions or multimedia extensions.

12. **An apparatus according to claim 1,** wherein the stationary Bluetooth interface (5) is provided with configuration control means (25) by means of configuration parameters and a local, remote or a combination thereof, configuration interface, said configuration means at least providing data related to the capacity of the physical parts of each stationary Bluetooth interface (5) and the number of integrated MSs able to be connected concurrently.

13. **An apparatus according to claims 1 or 12,** wherein the stationary Bluetooth interface (5) is connected to an already existing extension line type interface (26) of the PCS (1), said stationary Bluetooth interface (5) connected in this way named as BTGW (BlueTooth Gateway) (27).

14. **An apparatus according to claim 13,** wherein the BTGW (BlueTooth Gateway) (27) comprises
a RF link to antenna (28) operating under Bluetooth protocol
at least the elements of the CTP (29) defined by Bluetooth specifications
transcoding means (7, 23) for enabling media transfer and control signalling between the elements of the CTP (29) defined by Bluetooth specifications and the protocol "X" supported by said already existing extension line type interface (26) in the PCS (1).

15. **An apparatus according to claims 1 or 12,** wherein the stationary Bluetooth interface (5) is -integrated in the PCS (1), said stationary Bluetooth interface (5) connected in this way named as IBT (Integrated BlueTooth) (30).

16. **An apparatus according to claim 15,** wherein the IBT (Integrated BlueTooth) (30) comprises
a RF link to antenna (28) operating under Bluetooth protocol
at least the elements of the CTP (29) defined by Bluetooth specifications
transcoding means (7, 23) for enabling media transfer and control signalling between the elements of the CTP (29) defined by Bluetooth specifications and the control means and switching means (59) supported by the PCS (1).

17. **An apparatus according to claim 12,** wherein the configuration control means (25) of the stationary Bluetooth interface (5) are located either in
every stationary Bluetooth interface (5) or
centralised in the PCS control software (8) or
a combination thereof.

18. **An apparatus according to claim 1,** wherein the stationary Bluetooth interface (5) is at least one of the types selected from
single stationary Bluetooth interface (5) which control and serve one integrated MS
multiple stationary Bluetooth interface (5) which control and serve more than one integrated MS.

19. **An apparatus according to claim 1,** comprising at least one stationary Bluetooth interface (5), said stationary Bluetooth interface (5) comprising access control means for determining if a particular MS (2) has access or not to the PCS (1) through said stationary Bluetooth interface (5).

20. **An apparatus according to claim 1,** comprising at least one stationary Bluetooth interface (5) and the PCS (1) comprising access control means for determining if a particular MS (2) has access or not to the PCS (1) through a unique predefined stationary Bluetooth interface (31), through a set of predefined stationary Bluetooth interfaces (31) or through any available stationary Bluetooth interface (32).

21. **An apparatus according to claim 1,** comprising at least one stationary Bluetooth interface (5), a PCS (1) and access control means for determining if a particular MS (2) has access or not to the PCS (1) through a unique predefined stationary Bluetooth interface (31), through a set of predefined stationary Bluetooth interfaces (31) or through any available stationary Bluetooth interface (32), said control means being located in either a stationary Bluetooth interface (5), the PCS (1) or a combination thereof.

22. **An apparatus according to claims 1 or 13,** wherein the stationary Bluetooth interface (5) indicates to the PCS (1) the availability status of each admissible MS, said availability status selected from at least one of: switched off, out of coverage or present; by means of connecting or disconnecting from the stationary Bluetooth interface (5) at least one of its communication layers (33), belonging to the so called OSI model layers (33), towards the PCS (1), depending on the presence or absence of each admissible MS, respectively.

23. **An apparatus according to claims 1 or 13,** wherein the stationary Bluetooth interface (5) is provided with specific functions to indicate to the PCS (1) the availability status of each admissible MS, said availability status selected from at least one of: switched off, out of coverage or present; by means of control messages sent in a specific protocol used between the stationary Bluetooth interface (5) and the PCS (1); those functions being activated either by the stationary Bluetooth interface (5) or at request of the PCS (1).

24. **An apparatus according to claims 1 or 15,** wherein the stationary Bluetooth interface (5) is provided with specific functions to indicate to the PCS (1) the availability status of each admissible MS, said availability status selected from at least one of: switched off, out of coverage or present; by means of internal control messages between the stationary Bluetooth interface (5) and the control software (8) of the PCS (1); those functions being activated either by the stationary Bluetooth interface (5) or at request of the PCS (1).

25. **An apparatus according to claim 1,** wherein the storage means (9) have the capacity for each admissible MS of establishing an association between:
an identifier of said admissible MS;
and at least a first attribute corresponding to a first telephone extension number belonging to the PCS's extension realm.

26. **An apparatus according to claim 25,** wherein the storage means (9) store the BD_ADDR (Bluetooth Device Address) of each admissible MS as an identifier of said admissible MS.

27. **An apparatus according to claim 25,** wherein the storage means (9) have the capacity for each admissible MS of establishing an association between:
an identifier of said admissible MS corresponding to its BD_ADDR (Bluetooth Device Address);
and at least a second attribute corresponding to its MSISDN (mobile phone number).

28. **An apparatus according to claims 25 or 27,** wherein the storage means (9) have the capacity of at least establishing further associations between each admissible MS and other attributes concerning to said MS selected from at least one of the following attributes: internal user profile, user name identification, category barring, secondary telephone extensions, user location based on the stationary Bluetooth interface (5) used by the MS (2), and usable information for the operation of the PCS (1).

29. **An apparatus according to claims 25, 27 or 28,** wherein the association between an admissible MS and at least one of its attributes is accomplished when the admissible MS becomes a present MS.

30. **An apparatus according to claims 25, 27 or 28,** wherein the association between an admissible MS and at least one of its attributes has been previously established and remains fixed until a new parameterisation is done.

31. **An apparatus according to claims 25, 27 or 28,** wherein the association between an admissible MS and at least one of its attributes is stored within the MS (2).

32. **An apparatus according to claims 25, 27 or 28,** wherein the storage means (9) are located within the stationary Bluetooth interface (5).

33. **An apparatus according to claims 25, 27 or 28,** wherein the association between an admissible MS and at least one of its attributes is stored within the PCS (1).

34. **An apparatus according to any of claims 1, 2, 3, 4, 5, 7 and 27,** wherein when a phone call addressed to the aforementioned first telephone extension number assigned to a MS (2) is either:
not answered by said MS (2) or
not possible to be placed through Bluetooth mode communication means towards said MS (2); the first call-forward executing means in the PCS (1) further orders to forward said phone call from the PCS (1), either:
to another extension number belonging to the PCS's extension realm, via internal communication means in said PCS (1); or
to another party external to the PCS (1), including the MSISDN number of the MS (2) itself, via any existing external communication means in said PCS (1) with another public or private network.

35. **An apparatus according to claim 1,** wherein at least one admissible MS, is provided with bearer selection means located in a TA (Telephony Application) (34) of said MS, in order to select which network to use for making an outgoing call: if the PMN (3a) or the PCS (1); where said bearer selection means perform a control selection for outgoing calls between the two available interfaces: the standard interface (3) with the PMN (3a), and the Bluetooth interface (4) with the PCS (1), said selection based either: in a user indication, or in an analysis of the digits dialled by the user according to a list of numbers previously stored in the MS (2) containing the criteria of selection per stored number or series of numbers.

36. **An apparatus according to any of claims 1 and 35,** wherein at least one admissible MS, is provided with a TA (Telephony Application) software (34) enhanced with bearer selection means to perform a re-arrangement (35) of the digits dialled by the user depending on the bearer selected: PMN (36) or PCS (37).

37. **An apparatus according to claim 1,** wherein the PCS (1) in which said apparatus is integrated in, comprises bearer selection means to select which network to use for making an outgoing call: either the PMN (3a) or the PCS (1); said selection being accomplished by means of a co-ordinated operation via the stationary Bluetooth interface (5), between:
the TA (Telephony Application) (34) of the MS (2)
and the bearer selection means of the PCS (1);
where the TA (34) first sends the dialled digits to the PCS (1) and then, the PCS (1) returns to the TA (34) either:
an indication containing the network to be use,
a re-arrangement of the dialled digits to make the call, which implicitly contains information about which network to use,
or a combination thereof.

38. **An apparatus according to any of claims 1 and 13,** wherein when in communication with at least one MS (2), said MS is provided with a graphical method (38) to allow the user to browse and request at least one of the supplementary services (39) available in the PCS (1) by means of sending to said MS (2) a list of the supplementary services (39) that are available according to the present status of said MS (2), said list being posted from a stationary Bluetooth interface (5) upon internal information related to the services available per possible state of each MS (2), stored in the stationary Bluetooth interface (5) itself.

39. **An apparatus according to any of claims 1 and 13,** wherein when in communication with at least one MS (2), said MS (2) is provided with a graphical method (38) to allow the user to browse and request at least one of the supplementary services (39) available in the PCS (1) by means of sending to said MS (2) a list of the supplementary services (39) that are available according to the present status of said MS (2), said list being posted from a stationary Bluetooth interface (5) upon information received dynamically from the PCS (1), said information received dynamically being sent either via a standard communication protocol between the PCS (1) and said stationary Bluetooth interface (5), or transparently passed (40) from the PCS (1) to said MS (2), via the stationary Bluetooth interface (5).

40. **An apparatus according to any of claims 38 and 39,** wherein the stationary Bluetooth interface (5) upon receiving a message from a present MS containing a service request selected by the user, first interprets (41) that message in order to identify which service has been requested, then translates said service request to an appropriate service request standard format (42) according to the protocol used (43) to communicate with the PCS (1), and subsequently sends the said service request to the PCS (1) through said interface.

41. **An apparatus according to any of claims 1 and 15,** wherein when in communication with at least one MS (2), said MS is provided with a graphical method (38) to allow the user to request supplementary services (39) available in the PCS (1) by means of sending a list of services to said MS (2) that are available to be requested according to its present status, said list sent from the PCS (1) to the stationary Bluetooth interface (5), by the PCS control means (8), and then posted to the stationary Bluetooth interface (5) towards the MS (2) in a browsing protocol selected from at least one of: WAP (44) or HTTP; so that the user of said MS (2) has the option to browse and to select a service among the list of available services provided by the PCS (1).

42. **An apparatus according to claim 41,** wherein the stationary Bluetooth interface (5) upon receiving a message from a present MS containing a service request selected by the user, transparently passes (40) that message to the control software (8) of the PCS (1) for its identification and execution of the consequent actions according to the service selected by the user.

43. **An apparatus according to claim 41,** wherein the stationary Bluetooth interface (5) upon receiving a message from a present MS containing a service request selected by the user, first interprets (41) that message in order to identify which service has been requested, and then sends the explicit service (45) request to the control software (8) of the PCS (1) for its execution.

44. **An apparatus according to claim 1,** wherein all incoming calls made to a present MS using its MSISDN number, are forwarded from the PMN (3a) to a telephone extension number of the PCS (1) identified by the first telephone extension number assigned to said present MS, said incoming calls being forwarded by means of:
a request of "call forwarding under no-reachable" (46) from the MS (2) towards the PMN (3a), indicating said first telephone extension number together with the corresponding network prefixes, in order to reach the PCS (1) from the PMN (3a) as a "forwarding-to number", and
a subsequent disconnection of the radio link (47) from the MS (2) towards the PMN (3a) as soon as it logs--in into the PCS (1).

45. **An apparatus according to claim 44,** wherein the first telephone extension number together with the corresponding network prefixes are previously stored in the MS (2).

46. **An apparatus according to claim 44,** wherein the first telephone extension number together with the corresponding network prefixes are previously stored in the PCS (1) and received in the MS (2) from the PCS (1) via the stationary Bluetooth interface (5) when it logs-in into the PCS (1).

47. **An apparatus according to claim 44,** wherein the first telephone extension number together with the corresponding network prefixes are previously stored in the stationary Bluetooth interface (5) and received in the MS (2) from said stationary Bluetooth interface (5) when it logs-in into the PCS (1).

48. **An apparatus according to claim 1,** wherein all incoming calls made to a present MS using its MSISDN number, are forwarded from the PMN (3a) to a telephone extension number of the PCS (1) identified by the first telephone extension number assigned to said present MS, said incoming calls being forwarded by means of:
a request of "unconditional call forwarding" (48) from the MS (2) towards the PMN (3a), indicating said first telephone extension number together with the corresponding network prefixes, in order to reach the PCS (1) from the PMN (3a) as a "forwarding-to number", and
thus, leaving active the radio link from the MS (2) towards the PMN (3a).

49. **An apparatus according to claim 48,** wherein the first telephone extension number together with the corresponding network prefixes are previously stored in the MS (2).

50. **An apparatus according to claim 48,** wherein the first telephone extension number together with the corresponding network prefixes are previously stored in the PCS (1) and received in the MS (2) from the PCS (1) via the stationary Bluetooth interface (5) when it logs-in into the PCS (1).

51. **An apparatus according to claim 48,** wherein the first telephone extension number together with the corresponding network prefixes are previously stored in the stationary Bluetooth interface (5) and received in the MS (2) from said stationary Bluetooth interface (5) when it logs-in into the PCS (1).

52. **An apparatus according to claim 1,** wherein all calls made to a MS (2) using its MSISDN number are directly received again to its MSISDN number via the PMN (3a), either: by means of turning on the GSM radio link (49), or by means of sending a request to "cancel the call forwarding" (50), after a predefined time interval without contact between the stationary Bluetooth interface (5) and the MS (2).
